(19) Europäisches Patentamt
European Patent Office
Office européen des brevets

(11) **EP 0 932 836 B1**

(12) **FASCICULE DE BREVET EUROPEEN**

(45) Date de publication et mention
de la délivrance du brevet:
**26.03.2008 Bulletin 2008/13**

(51) Int Cl.:
***G01S 13/28*** (2006.01)

(21) Numéro de dépôt: **98940300.1**

(86) Numéro de dépôt international:
**PCT/FR1998/001607**

(22) Date de dépôt: **21.07.1998**

(87) Numéro de publication internationale:
**WO 1999/005543 (04.02.1999 Gazette 1999/05)**

(54) **PROCEDE DE COMPRESSION D'IMPULSION AVEC UNE FORME D'ONDE A BANDE SYNTHETIQUE**

VERFAHREN FÜR IMPULSKOMPRESSION MIT SYNTHETISCHEM-BAND WELLENFORMEN

METHOD FOR PULSE COMPRESSION WITH A STEPPED FREQUENCY WAVEFORM

(84) Etats contractants désignés:
**DE FR GB IT**

(30) Priorité: **22.07.1997 FR 9709285**

(43) Date de publication de la demande:
**04.08.1999 Bulletin 1999/31**

(73) Titulaire: **THOMSON CSF**
**75008 Paris (FR)**

(72) Inventeurs:
• **NORMANT, Eric,**
**Thomson-CSF Prop. Intellectuelle**
**F-94117 Arcueil Cedex (FR)**
• **COTTRON, Rodolphe,**
**Thomson-CSF Prop. Intellect.**
**F-94117 Arcueil Cedex (FR)**

(56) Documents cités:
**US-A- 4 161 732          US-A- 5 128 681**
**US-A- 5 309 160**

• **MCGROARY F ET AL: "A STEPPED CHIRP TECHNIQUE FOR RANGE RESOLUTION ENHANCEMENT" PROCEEDINGS OF THE NATIONAL TELESYSTEMS CONFERENCE, ATLANTA, MARCH 26 - 27, 1991, vol. VOL. 1, no. -, 26 mars 1991, pages 121-126, XP000266737 INSTITUTE OF ELECTRICAL AND ELECTRONICS ENGINEERS**

**Description**

La présente invention concerne les radars et les sonars. Il est connu d'améliorer la résolution en distance d'un radar ou d'un sonar par la technique de compression d'impulsion. En effet, le pouvoir de résolution en distance $\Delta D$ d'un radar ou d'un sonazr est lié à la durée $\tau$ en réception de la forme d'onde impulsionnelle émise par la relation :

$$\Delta D = \frac{c\tau}{2}$$

où c est la vitesse de propagation des ondes. Comme la durée $\tau$ et la largeur du spectre de fréquence ou bande passante $\Delta F$ de la forme d'onde impulsionnelle émise sont liées par une relation de la forme :

$$\tau \Delta F = \beta$$

on peut également dire que le pouvoir de résolution en distance d'un radar ou d'un sonar est inversement proportionnel à la bande passante de sa forme d'onde impulsionnelle.

La technique de compression d'impulsion consiste à allonger la forme d'onde impulsionnelle à l'émission puis à la comprimer à la réception ce qui limite la puissance crête à émettre. Pour la mettre en pratique, on utilise en général, à l'émission, une impulsion quasi-rectangulaire modulée linéairement en fréquence et à la réception un filtre de compression retardant différemment les diverses composantes fréquentielles de l'impulsion de façon à les faire coïncider. Le taux de compression et donc le pouvoir de résolution en distance est limité par la capacité que l'on a à engendrer des impulsions modulées en fréquence de bande importante.

Une façon de repousser cette limitation consiste à employer une forme d'onde particulière connue sous la désignation de:"*bande synthétique*" (en anglais : *Stepped Frequency*) et décrite notamment dans le livre de J.P. Hardange, P. Lacomme, J.C. Marchais, intitulé : "Radars aéroportés et spatiaux", paru aux éditions Masson 1995, pages 165-167.

Un autre exemple est "A Stepped Chirp Technique For Range Resolution Enhancement" présenté par Mc Groary et Lindell dans La "National Telesystems Conference" 1991.

La *bande synthétique* consiste à émettre une forme d'onde composée d'un motif répétitif de N impulsions successives de durée T, de bande passante B, espacées d'un intervalle $\Delta T$ en temps et $\Delta F$ en fréquence, la première étant centrée sur $f_0$, la deuxième sur $f_0+\Delta f$, la troisième sur $f_0+2\Delta f$, etc.

Après démodulation par sa fréquence porteuse, chaque impulsion reçue est filtrée par un filtre adapté puis échantillonnée et convertie en numérique. Le traitement se poursuit par une transformée de Fourier discrète sur N échantillons appartenant à la même porte distance et acquis successivement pour les N fréquences d'émission des N impulsions de la forme d'onde émise.

La réponse $|c(\Delta t)|$ du récepteur adapté à la forme d'onde, à l'écho retourné par une cible au bout d'un temps $t_0$, qui résulte de la transformée de Fourier discrète, correspond à celle du filtre adapté à chaque impulsion élémentaire multipliée par une fonction proche d'un sinus cardinal :

$$\frac{\sin\left(\pi \, N\Delta f\left(t_0 - \Delta t\right)\right)}{\sin\left(\pi \, \Delta f\left(t_0 - \Delta t\right)\right)}$$

Elle a une largeur à 3 dB de :

$$\tau_{3dB} = \frac{1}{N\Delta f}$$

et contient un terme périodique de période $1/\Delta f$.

La résolution est fixée par la largeur $1/N\Delta f$ du spectre en réception du motif de la forme d'onde émise alors qu'elle ne serait que de 1/B pour un motif de forme d'onde d'émission limité à une impulsion élémentaire.

Pour respecter le théorème d'échantillonnage, la période d'échantillonnage $\tau_e$ doit être inférieure à l'inverse 1/B de la bande des impulsions élémentaires de la forme d'onde. De plus, pour éviter les ambiguïtés distance, il faut que l'analyse effectuée par la transformée de Fourier couvre au moins les m portes distance sur lesquelles s'étend la réponse d'une cible à une impulsion en sortie du filtre adapté, ce qui se traduit sur l'écart élémentaire $\Delta f$ entre les fréquence porteuses des impulsions, la période d'échantillonnage $\tau_e$ et la bande passante B de chaque impulsion par la condition :

$$\frac{1}{\Delta f} > m\,\tau_e >> \frac{1}{B}$$

Cette condition impose un certain chevauchement entre les spectres de fréquence des impulsions élémentaires qui fait que la résolution en distance n'est améliorée que d'un facteur $N\Delta f/B$ inférieur à N.

Une autre contrepartie de l'utilisation de N impulsions successives dans le motif de la forme d'onde émise est que la couverture d'une fauchée donnée, avec une certaine résolution, prend un temps N fois plus grand que pour un radar à compression d'impulsion classique. Si la contrainte est de respecter une fréquence de récurrence minimum comme dans le cas d'un radar de cartographie, la dimension de la fauchée est réduite dans un rapport N.

La présente invention a pour but d'obtenir une très grande résolution distance à partir d'un motif de forme d'onde émise constitué d'une suite de N impulsions élémentaires de résolution moyenne, de spectres de fréquence rectangulaires de bande B et de fréquences porteuses échelonnées de manière que leurs spectres de fréquence viennent se raccorder de façon exacte pour former un spectre équivalent de largeur NxB.

Elle vise à recréer en réception une réponse à une impulsion équivalente de bande de fréquence NxB égale à celle du motif de forme d'onde à bande synthétique et, par conséquent, à améliorer la résolution d'un facteur N, cela sans qu'apparaissent des ambiguïtés supplémentaires comme dans le procédé connu de la bande synthétique.

Les avantages de l'émission d'un motif de forme d'onde à bande synthétique par rapport à celle d'un autre motif de forme d'onde hypothétique qui aurait une bande de fréquence NxB sur une seule impulsion élémentaire sont :

- une plus petite fréquence d'échantillonnage du signal en réception nécessaire pour obtenir une résolution donnée (diminution dans un facteur N) ;
- une plus grande capacité à résister à la saturation du récepteur par des brouillages électromagnétiques intentionnels ou non puisque la bande passante du récepteur est N fois plus petite ;
- une plus grande résistance à la dispersivité de l'antenne lors d'un balayage électronique du faisceau.

En contrepartie, elle conserve l'inconvénient du procédé connu de la bande synthétique qui est de réduire d'un facteur N la dimension de la fauchée.

L'invention a pour objet un procédé de compression d'impulsion très haute résolution distance pour radar ou sonar consistant :

- à utiliser à l'émission un motif répétitif de forme d'onde à bande synthétique constitué d'une suite de N impulsions élémentaires cohérentes modulées linéairement en fréquence, se succédant à une fréquence de récurrence $F_r$, de spectres de fréquence rectangulaires de bande élémentaire B et de fréquences porteuses échelonnées de manière que leurs spectres de fréquence viennent se raccorder de façon exacte dans le prolongement les uns des autres pour former un spectre de fréquence global de largeur NxB, les dites N impulsions élémentaires se succédant dans un ordre quelconque correspondant par une permutation $p(k)$ à l'ordre naturel par fréquences porteuses croissantes ;
- à démoduler en réception le signal reçu en retour de chaque impulsion élémentaire par la fréquence porteuse de l'impulsion élémentaire considérée afin d'en extraire l'enveloppe complexe;
- à filtrer les signaux reçus et démodulés par un filtre passant la bande de fréquence B d'une impulsion élémentaire ;
- à échantillonner les signaux reçus, démodulés et filtrés à une fréquence d'échantillonnage de l'ordre de la bande B des impulsions élémentaires, selon deux échelles de temps : l'une à courte échéance, de variable $\tau$ mesurant le temps s'écoulant entre deux impulsions successives d'un motif de la forme d'onde d'émission et assurant un repérage de cibles selon un axe distance, l'autre à plus longue échéance de variable t, mesurant la succession des motifs de la forme d'onde d'émission et assurant un repérage de cibles selon un axe Doppler ou azimut parallèle à la direction de déplacement du radar ou du sonar par rapport aux cibles ;
- à translater le spectre de fréquence du signal reçu en retour d'une K ème impulsion afin de le remettre à sa place au sein du spectre de fréquence du motif global de la forme d'onde émise en multipliant les échantillons du signal en retour d'une k ème impulsion élémentaire par une exponentielle complexe fonction de la variable temporelle $\tau$ suivant l'axe distance :

$$t_r^k\left(\tau\right) = \exp\left\{i2\pi\,\Delta f_{p(k)}\left(\tau + \tau_0\right)\right\}$$

$\tau_o$ étant le délai au bout duquel on commence à stocker les échantillons numériques sur l'axe distance, $\Delta f_{p(k)}$ étant l'écart de fréquence porteuse de la k ème impulsion élémentaire par rapport à la fréquence porteuse centrale $f_c$ du motif ;

- à effectuer une analyse spectrale en distance d'un suréchantillonnage, dans un rapport N, des échantillons complexes translatés en fréquence pour passer, en distance, du domaine temporel à variable $\tau$ à un domaine fréquentiel à variable F et obtenir un spectre de fréquence échantillonné pour le signal de retour de chaque impulsion élémentaire;
- à sélectionner dans le spectre de fréquence en distance obtenu pour le signal reçu en retour d'une k ème impulsion élémentaire, les échantillons appartenant à une plage centrée autour de $\Delta f_{p(k)}$ avec une largeur égale à celle de la bande B d'une impulsion élémentaire;
- à construire, à partir des échantillons des plages sélectionnées des spectres de fréquence en distance des signaux en retour des impulsions élémentaires, un échantillonnage du produit du spectre de fréquence global en distance du signal reçu en retour de l'ensemble des impulsions élémentaires d'un motif de forme d'onde à bande synthétique, par le conjugué du spectre de fréquence global des impulsions élémentaires d'un motif de forme d'onde à bande synthétique afin de réaliser un filtrage adapté globalement à la forme d'onde à bande synthétique, et
- à effectuer une analyse spectrale inverse en distance pour retourner dans le domaine temporel en distance et obtenir un signal reçu comprimé en distance.

L'analyse spectrale en distance d'un suréchantillonnage dans un rapport N des échantillons translatés en fréquence du signal reçu en retour d'une impulsion élémentaire d'ordre k peut se faire :

- en suréchantillonnant, dans un rapport N, les échantillons complexes translatés en fréquence, par insertion entre chacun d'eux N-1 échantillons nuls, et
- en effectuant une transformée de Fourier discrète en distance sur les suréchantillons obtenus, pour passer, en distance, du domaine temporel à variable $\tau$ à un domaine fréquentiel à variable F.

L'analyse spectrale en distance d'un suréchantillonnage dans un rapport N des échantillons translatés en fréquence du signal reçu en retour d'une impulsion élémentaire d'ordre k peut également se faire :

- en effectuant une transformée de Fourier discrète en distance sur les échantillons complexes translatés en fréquence, pour passer en distance du domaine temporel à variable $\tau$ à un domaine fréquentiel à variable F, et
- en dupliquant N fois le spectre de fréquence échantillonné obtenu.

Cette dernière manière de réaliser l'analyse spectrale en distance d'un suréchantillonnage, dans un rapport N, des échantillons complexes translatés en fréquence du signal reçu en réponse à l'émission d'une impulsion élémentaire présente un avantage certain sur la précédente car elle permet de remplacer le calcul de N transformées de Fourier de grande taille par celui de N transformées de Fourier de taille plus petite, le rapport de taille étant de l'ordre de N.

La construction de l'échantillonnage du produit du spectre de fréquence global du signal reçu par le conjugué du spectre de fréquence global d'un motif de forme d'onde à bande synthétique peut se faire :

- en multipliant les échantillons de la plage sélectionnée du spectre de fréquence en distance du signal reçu en retour d'une k ème impulsion élémentaire par le conjugué $X_{1,k}^*\left(F\right)$ du spectre de fréquence de cette k ème impulsion élémentaire émise, de manière à réaliser un filtrage adapté, $X_{1,k}(f)$ répondant à la relation :

$$X_{1,k}(F) = P\left(F - \Delta f_{p(k)}\right)e^{-i2\pi\left(F - \Delta f_{p(k)}\right)T_{/}2}$$

ou, de manière plus précise, à la relation :

$$X_{1,k}(F) = P\left(F - \Delta f_{p(k)}\right)e^{-i2\pi\left(F - \Delta f_{p(k)}\right)T_{/}2}e^{i2\pi\widetilde{f}_{dc}\Delta t_k}$$

$P(F)$ étant le spectre d'une impulsion élémentaire émise à la fréquence porteuse centrale du motif de forme d'onde à bande synthétique et $\widetilde{f}_{dc}$ un paramètre Doppler moyen traduisant l'influence de la variable temporelle t sur le temps de propagation aller-retour radar cible, et

- en juxtaposant les plages des spectres de fréquence obtenus, après filtrages adaptés, pour les signaux reçus en retour des impulsions élémentaires, pour engendrer un spectre global de fréquence qui correspondrait, après filtrage adapté, à celui d'un signal obtenu en réponse à une impulsion unique modulée linéairement en fréquence de bande NxB.

La construction de l'échantillonnage du produit du spectre de fréquence global du signal reçu par le conjugué du spectre de fréquence global d'un motif de forme d'onde à bande synthétique peut également se faire :

- en juxtaposant les échantillons des plages sélectionnées des spectres de fréquence des signaux reçus en retour des impulsions élémentaires, et

- en multipliant les échantillons du spectre de fréquence global obtenu par le conjugué $X_1^*(F)$ du spectre de fréquence global résultant de la juxtaposition des spectres de fréquence des impulsions élémentaires émises, $X_1(F)$ répondant à la relation :

$$X_1(F) = \sum_k P\left(F - \Delta f_{p(k)}\right)e^{-i2\pi\left(F - \Delta f_{p(k)}\right)T_{/}2}rect\left[\frac{F - \Delta f_{p(k)}}{B}\right]$$

ou, de manière plus précise, à la relation :

$$X_1(F) = \sum_k rect\left[\frac{F - \Delta f_{p(k)}}{B}\right]P\left(F - \Delta f_{p(k)}\right)e^{-i2\pi\left(F - \Delta f_{p(k)}\right)T_{/}2}e^{i2\pi\widetilde{f}_{dc}\Delta t_k}$$

$P(F)$ étant le spectre d'une impulsion élémentaire émise à la fréquence porteuse centrale du motif de forme d'onde à bande synthétique et $\widetilde{f}_{dc}$ un paramètre Doppler moyen traduisant l'influence de la variable temporelle t sur le temps de propagation aller-retour radar cible.

Avantageusement, lorsque le signal de réception est destiné à subir des traitements Doppler, que ce soit des analyses spectrales propres aux radars pulse-doppler ou un traitement SAR de radar de cartographie, le procédé précédent de compression d'impulsion très haute résolution distance est complété par un traitement complémentaire d'initialisation des traitements Doppler. Ce traitement complémentaire s'opère sur les échantillons du signal reçu classés en un tableau à deux dimensions $v_2(\tau,t)$ en fonction des deux variables temporelles : $\tau$ selon l'axe distance et t selon l'axe Doppler. Il consiste, après avoir effectué successivement une transformée de Fourier en distance puis une transformée de Fourier en azimut du signal pour passer dans les domaines fréquentiels en distance avec la variable fréquentielle F et en azimut avec la variable fréquentielle f et obtenir un tableau d'échantillons $V_2(F,f)$, à multiplier les séquences d'échantillons appartenant aux différentes régions spectrales distance des impulsions élémentaires partageant en N sous-bandes de largeur B, la bande NxB de la variable fréquentielle F, par un terme correctif de phase tel que :

$$\exp\left\{i2\pi\left(f - f_{dc}\right)\Delta t_k\right\}$$

où $\Delta t_k$ est le délai séparant la k ème impulsion considérée du milieu du motif de la forme d'onde d'émission dont elle fait partie et $\tilde{f}_{dc}$ un paramètre Doppler moyen traduisant l'influence de la variable temporelle t sur le temps de propagation aller-retour radar cible. Ce terme correctif $b_r^k\left(f\right)$ compense un terme de déphasage fonction du rang des impulsions élémentaires introduit par la découpe du motif du signal d'émission en plusieurs impulsions élémentaires de porteuses échelonnées.

L'utilisation d'un motif répétitif de forme d'onde constitué d'une suite de N impulsions élémentaires cohérentes de fréquence porteuses échelonnées ne se succédant pas dans un ordre naturel de fréquences porteuses croissantes ou décroissantes mais selon une certaine permutation par rapport à un tel ordre naturel permet de réduire l'ambiguïté distance dans la mesure où cela permet d'adopter un écart entre les fréquences porteuses de deux impulsions successives dans un motif qui est plus grand que l'échelon unitaire et qui augmente le pouvoir de réjection du filtre de bande du récepteur vis à vis des réponses ambiguës ne correspondant pas à la dernière impulsion émise mais à une impulsion précédente.

D'autres caractéristiques et avantages de l'invention ressortiront de la description ci-après d'un mode de réalisation donné à titre d'exemple. Cette description sera faite en regard du dessin dans lequel :

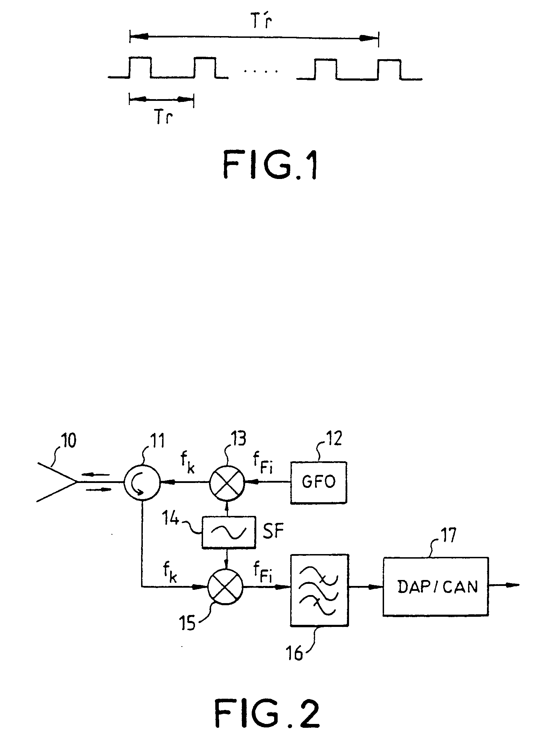

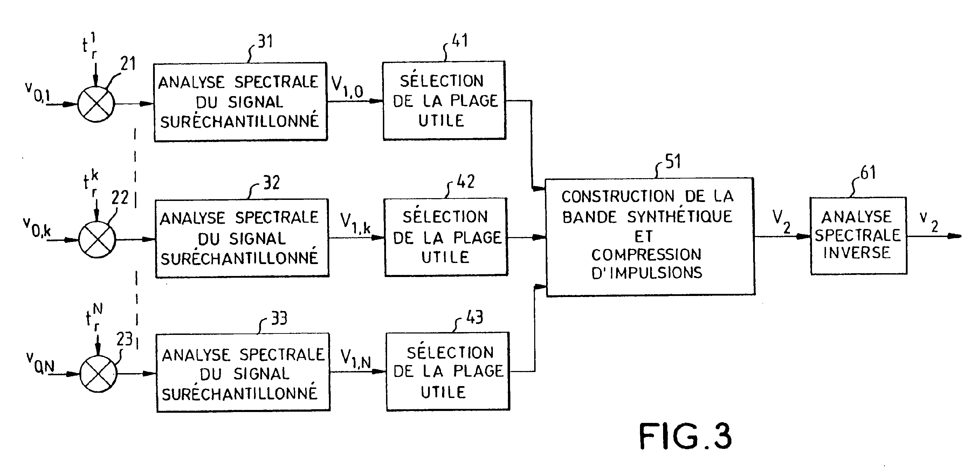

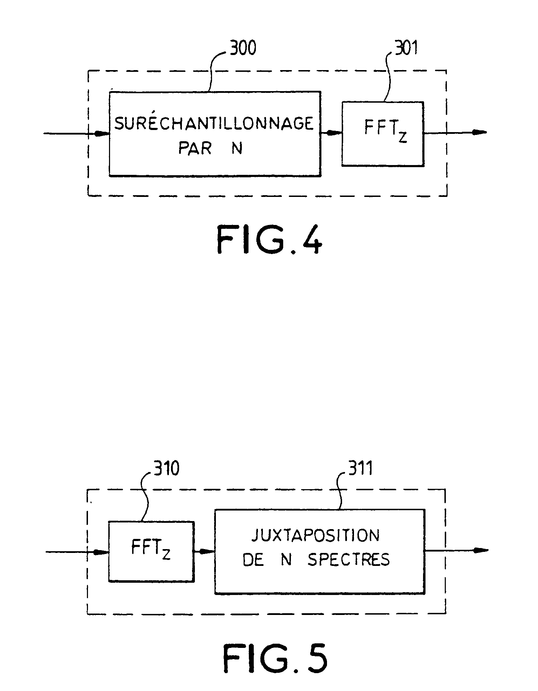

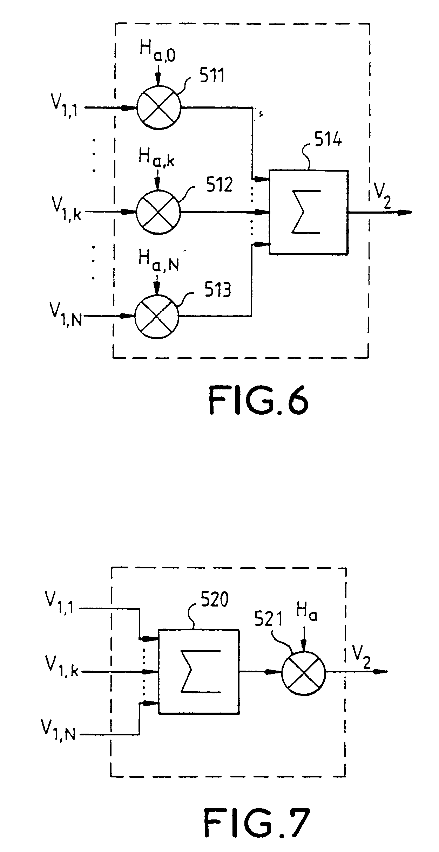

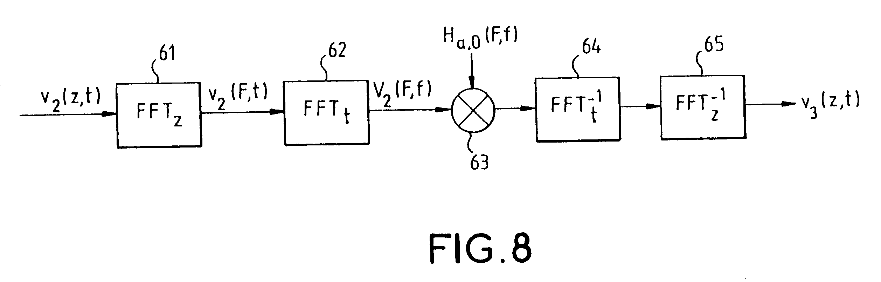

- une figure 1 représente un chronogramme du motif de la forme d'onde d'émission à bande synthétique utilisé dans le procédé de compression d'impulsion très haute résolution distance selon l'invention ;
- une figure 2 représente un schéma synoptique d'un radar mettant en oeuvre le motif de forme d'onde d'émission illustré à la figure 1 ;
- une figure 3 représente un schéma synoptique d'un traitement de compression d'impulsion distance selon à l'invention ;
- des figures 4 et 5 détaillent deux façons de faire une analyse spectrale du signal suréchantillonné utilisables au cours d'un traitement de compression d'impulsion selon l'invention ;
- des figures 6 et 7 détaillent deux façons de reconstruire le spectre de fréquence global du signal de réception en réponse à l'émission d'un motif de forme d'onde à bande synthétique et de comprimer ce spectre de fréquence global utilisables au cours d'un traitement de compression d'impulsion selon l'invention ; et
- une figure 8 représente un schéma synoptique d'un prétraitement d'initialisation Doppler complétant avantageusement un traitement de compression d'impulsion selon l'invention dans le cas d'une mise en oeuvre ultérieure d'un traitement Doppler.

Comme le montre la figure 1, la forme d'onde d'émission que l'on se propose d'utiliser est constituée de la répétition, à une fréquence de récurrence $F'_r=1/T'_r$, d'un motif constitué de N impulsions élémentaires de même durée T répétées à une fréquence de récurrence $F_r = 1/T_r$. Sans nuire à la généralité, on supposera dans la suite que :

$$F_r = NF_r^{'}$$

Dans l'hypothèse où les impulsions élémentaires sont modulées linéairement en fréquence selon une même pente $\alpha$, l'expression de leur enveloppe complexe est donnée par la relation :

$$p\left(\tau\right) = rect\left[\frac{\tau}{T}\right]\exp\left\{i2\pi\frac{1}{2}\alpha t^2\right\}$$

La bande de fréquence B occupée par une impulsion élémentaire est égale à :

$$B = |\alpha|T$$

En supposant que le produit BxT est suffisamment grand (> 200), et en appliquant le principe de la phase stationnaire, le spectre de fréquence de cette forme d'onde élémentaire est donné par :

$$P(F) \approx \sqrt{\frac{T}{B}} rect\left[\frac{F}{B}\right] \exp\left\{i\frac{\pi}{4}\text{sgn}(\alpha)\right\} \exp\left\{-i2\pi\frac{F^2}{2\alpha}\right\}$$

Ce spectre de fréquence a une enveloppe quasi-rectangulaire.

Dans la suite, on se restreindra à ce type d'impulsions élémentaires bien que cela ne soit pas du tout une nécessité en théorie, car il est de loin le plus répandu dans les systèmes d'imagerie radar opérationnels. En outre, le fait que le spectre de fréquence de ce type d'impulsions soit quasi-rectangulaire en fait un candidat particulièrement adapté au procédé de compression que l'on va décrire.

On distingue chaque impulsion élémentaire dans le motif de la forme d'onde par son rang k référencé par rapport au milieu du motif. Pour un nombre d'impulsions élémentaires N impair, le rang k est compris entre :

$$-\frac{N-1}{2} \leq k \leq \frac{N-1}{2}$$

Pour un nombre d'impulsions élémentaires N pair, le rang k est compris entre :

$$-\frac{N}{2} + 1 \leq k \leq \frac{N}{2}$$

L'information utile pour obtenir la résolution sur l'axe distance est ici répartie sur une série de N impulsions au lieu d'être contenue dans une unique impulsion comme c'est le cas des systèmes classiques d'imagerie radar employant un motif répétitif de forme d'onde d'émission constitué d'une série d'impulsions identiques. Chaque impulsion de la série a une avance ou un retard relatif par rapport à une autre. On choisit, dans la suite de la description, de calculer cette avance ou ce retard par rapport à une référence située au milieu du motif. Cela permet dans les applications d'imagerie radar à l'aide de radar à ouverture synthétique SAR de fournir une histoire de phase Doppler symétrique.

Dans ces conditions, le décalage temporel de chaque impulsion en fonction de son rang est donné par :

$$\begin{cases} \Delta t_k = kT_r' & pour\ N\ \text{impair} \\ \Delta t_k = kT_r' - T_r'/2 & pour\ N\ \text{pair} \end{cases}$$

Soit, B, la bande utile associée à chaque impulsion élémentaire, on s'arrange pour que les N fréquences porteuses utilisées pour moduler les impulsions élémentaires soient espacées de B. Cela permet de reconstituer, sur la bande synthétique, un spectre global équivalent sans trou. Ainsi, chaque impulsion élémentaire est modulée sur une fréquence porteuse, $f_k$, qui dépend du rang de l'impulsion dans le motif. Si l'on range dans un motif les impulsions par ordre de fréquence porteuses croissantes, l'expression de la fréquence porteuse $f_k$ de l'impulsion de rang k est donnée par :

$$f_k = \begin{cases} f_c + kB, N \text{ impair} \\ f_c - \dfrac{B}{2} + kB, N \text{ pair} \end{cases} = f_c + \Delta f_k$$

où $f_c$ désigne la fréquence porteuse centrale du motif.

Cependant, pour diminuer le niveau d'ambiguïté distance, il est intéressant d'émettre les impulsions constituant un motif, dans un ordre différent de l'ordre naturel des fréquences porteuses croissantes ou décroissantes. En effet, on a intérêt, pour faciliter le filtrage opéré par le filtre passe-bande de réception, à faire en sorte que les impulsions se succèdent dans un motif avec des écarts de fréquences porteuses supérieurs à l'échelon unité. Une impulsion de rang k dans le motif a alors une fréquence porteuse $f_{p(k)}$ qui n'est pas la fréquence $f_k$ mais une autre $f_{k'}$. l'indice k' correspondant à l'indice k par une permutation p. Autrement dit, la région spectrale occupée par une impulsion de rang k est donnée par :

$$-NB/2 + p(k)B \le f \le -NB/2 + \left[ p(k) + 1 \right] B$$

La figure 2 donne un exemple de schéma synoptique de radar mettant en oeuvre cette forme d'onde. On y distingue une antenne 10 reliée par un circulateur 11 à une partie émission et à une partie réception.

La partie émission comporte un générateur de forme d'onde GFO 12 engendrant, à une fréquence porteuse intermédiaire $f_{Fi}$, une impulsion élémentaire à modulation linéaire de fréquence. Ce générateur de forme d'onde GFO 12 est relié à l'antenne 10 par l'intermédiaire du circulateur 11 et d'un mélangeur 13 qui reçoit d'une source de fréquences SF 14, différentes fréquences porteuses permettant de faire en sorte que les N impulsions élémentaires de la forme d'onde appliquée à l'antenne 10 modulent chacune les fréquences $f_1,.., f_k,.., f_N$.

La partie réception comporte, en sortie du circulateur 11, un mélangeur 15 qui mélange le signal reçu par l'antenne 10 avec les fréquences porteuses issues de la source de fréquences SF 14 pour ramener en fréquence intermédiaire $f_{Fi}$, les échos en retour des impulsions élémentaires de la forme d'onde émise. Ce mélangeur 15 est suivi d'un filtre passe-bande 16 adapté à la bande de fréquence d'une impulsion élémentaire et d'un démodulateur amplitude-phase associé à un convertisseur analogique-numérique DAP/CAN 17 qui fournit un échantillonnage de l'enveloppe complexe du signal reçu et démodulé.

Pour permettre la compression d'impulsion en réception du motif de forme d'onde émis, il faut assurer la cohérence entre les différentes impulsions élémentaires le constituant. Cela impose à la source de fréquences SF 14 d'être cohérente pour chacune des N fréquences porteuses générées. D'autre part, pour certaines applications, il arrive que le retour utile correspondant à une impulsion de rang k se produise dans la fenêtre de réception d'une impulsion de rang différent. Cela nécessite alors soit N sources de fréquence cohérentes différentes associées à chacune des fréquences porteuses, soit une source unique de fréquences capable de garder la référence de phase associée à une porteuse donnée après avoir émis entre temps sur plusieurs autres fréquences.

On constate que grâce au filtrage adapté à l'impulsion élémentaire, le nombre d'ambiguïtés distance n'augmente pas pour la forme d'onde considérée par rapport à une forme d'onde qui serait constituée d'une même impulsion élémentaire répétée à la fréquence de récurrence $F_r$. Cela est dû au fait que les retours correspondant à des rangs différents de l'impulsion élémentaire pour laquelle la source de fréquence est réglée dans l'instant sont rejetés par le filtre passe-bande de réception.

En toute généralité, le signal d'écho $v_{o,k}(\tau,t)$ en réponse à aux impulsions émises de k ème rang peut être considéré comme le résultat d'une corrélation à deux dimensions $\tau$ et $t$ entre le coefficient de rétrodiffusion complexe $\gamma_k(\tau,t)$ des cibles de coordonnées $\tau$ et $t$ pour la fréquence porteuse des impulsions de rang k, et le produit de la forme d'onde p() d'une impulsion élémentaire de rang k émise par une réponse impulsionnelle $h_{az,k}(\ )$. La forme d'onde p() de l'impulsion élémentaire de rang k considérée est retardée du temps nécessaire à sa propagation aller et retour jusqu'au point voulu de coordonnées $\tau$ et $t$, le retard variant non seulement en fonction de la coordonnée en distance $\tau$ mais également en fonction de la coordonnée en azimut t afin de prendre en compte le phénomène de migration occasionné par un possible déplacement du radar par rapport aux cibles. La réponse impulsionnelle en azimut $h_{az,k}(\ )$ traduit un effet antenne synthétique ou SAR résultant de la largeur d'ouverture en azimut de l'antenne du radar et du possible déplacement du radar par rapport aux cibles.

En adoptant pour la forme d'onde d'une impulsion élémentaire et la réponse impulsionnelle de l'effet antenne synthétique une origine des temps commune, selon la coordonnée en azimut t, indépendante de l'ordre d'une impulsion dans un motif de forme d'onde à bande synthétique, il vient :

$$v_{0,k}(\tau,t) = \iint \gamma_k(\tau',t') p\left(\tau - \frac{T}{2} + \tau_0 - \tau_c(t - t' - T_e/2 + \Delta t_k) - \tau'\right)$$

$$h_{az,k}(t - t' - T_e/2 + \Delta t_k)d\tau'dt'$$

$$(1)$$

T étant la durée d'une impulsion élémentaire,

$\tau_0$ étant le délai après émission d'une impulsion élémentaire à partir duquel on commence à considérer le signal de reçu,

$T_e$ le temps d'éclairement d'une cible,

$\tau_c$ étant la variation du temps de propagation aller-retour radar cible pendant le temps d'éclairement $T_e$,

$\Delta_{tk}$ le décalage temporelle de l'impulsion de rang k.

La réponse impulsionnelle en azimut $h_{az,k}$ due à l'effet antenne synthétique, c'est à dire à l'effet combiné d'une antenne ayant une certaine ouverture en azimut et du déplacement en azimut du radar par rapport aux cibles, s'exprime, de manière bien connue, par la relation :

$$h_{az,k}(t) = rect\left[\frac{t}{T_e}\right]g_{az}(t)\exp\left[-i2\pi f_{p(k)}\tau_c(t)\right] \qquad (2)$$

où $g_{az}$ est le diagramme d'antenne émission-réception en azimut du radar et $f_{p(k)}$ la fréquence porteuse de l'impulsion élémentaire de rang k :

$$f_{p(k)} = f_c + \Delta f_{p(k)} \qquad (3)$$

$f_c$ étant la fréquence porteuse centrale d'un motif et $\Delta f_{p(k)}$ l'écart de la fréquence porteuse de la k ème impulsion par rapport à la fréquence porteuse centrale du motif $f_c$, sachant que les impulsions élémentaires ne sont pas dans l'ordre naturel mais permutées pour améliorer l'efficacité du filtre passe-bande de réception.

D'après l'expression du signal d'écho $v_{o,k}(\tau,t)$ en réponse à aux impulsions émises de rang k, on se rend compte qu'une grande synergie existe avec le cas de la forme d'onde classique constituée d'une suite d'impulsions élémentaires de même fréquence porteuse. Il est donc concevable de chercher à extraire du signal de réception consécutif à l'émission d'une forme d'onde à bande synthétique à N impulsions élémentaires de fréquences porteuses différentes, N signaux de vidéo brute de réception traditionnels avec des paramètres adaptés à chaque impulsion élémentaire ($\Delta t_k$, paramètres Doppler) puis à fusionner ces N signaux de vidéo brute indépendants en intercalant les récurrences en fonction de leur rang pour tenter de se rapprocher du signal reçu en écho d'une forme d'onde classique constituée d'une même impulsion de bande NxB.

La ligne directrice du traitement de compression d'impulsion pour une forme d'onde à bande synthétique consistera alors à synthétiser, à partir des N signaux de vidéo brute de réception extraits à partir des signaux reçus en réponse aux N impulsions élémentaires de la forme d'onde à bande synthétique, un spectre global de largeur N fois supérieure à celui d'une impulsion élémentaire puis à comprimer le signal correspondant à ce spectre global.

Pour synthétiser un spectre global de largeur N fois supérieure à celui d'une impulsion élémentaire, on commence par mettre chaque spectre des N signaux reçus en réponse aux N impulsions élémentaires à sa place au sein du spectre global d'une forme d'onde à bande synthétique. Cette mise en place s'obtient en translatant le spectre du signal reçu en réponse à une impulsion élémentaire de rang k, d'une valeur $\Delta f_{p(k)}$, en multipliant le signal vidéo brute reçu en réponse à une impulsion élémentaire de rang k par :

$$tr_k(\tau) = \exp\left[i2\pi\Delta f_{p(k)}(\tau + \tau_0)\right]$$

Après multiplication par le signal de translation, on effectue une transformée de Fourier selon la coordonnée distance $\tau$, pour extraire le spectre de fréquence du signal reçu en écho à une impulsion émise de rang k. Ce *spectre* $V_{1,k(f,t)}$ s'exprime en fonction de la valeur du signal $v_{0,k}(\tau,t)$ prise dans la relation (1) par :

$$V_{1,k}(F,t) = \iint \gamma_k(\tau',t')h_{az,k}(t - t' - T_e/2 + \Delta t_k)$$
$$\int p(\tau - \tau' - T/2 + \tau_0 - \tau_c(t - t' - T_e/2 + \Delta t_k))$$
$$\exp\left[i2\pi\Delta f_{p(k)}(\tau + \tau_0)\right]\exp\left[-i2\pi F\tau\right]d\tau d\tau' dt'$$

$$= P\left(F - \Delta f_{p(k)}\right)\exp\left[-i2\pi\left(F - \Delta f_{p(k)}\right)T/2\right]$$
$$\iint \gamma_k(\tau',t')\exp\left[i2\pi F\tau_0\right]h_{az,k}(t - t' + T_e/2 + \Delta t_k)$$
$$\exp\left[-i2\pi\left(F - \Delta f_{p(k)}\right)(\tau' + \tau_c(t - t' - T_e/2 + \Delta t_k))\right]d\tau' dt'$$

En remplaçant la réponse impulsionnelle en azimut à une impulsion élémentaire de rang k, $h_{az,k}()$ par sa valeur prise dans la relation (2) et le terme $\Delta f_{p(k)}$ par sa valeur prise dans la relation (3), et en effectuant les simplifications qui s'imposent, on obtient :

$$V_{1,k}(F,t) = P\left(F - \Delta f_{p(k)}\right)\exp\left[-i2\pi\left(F - \Delta f_{p(k)}\right)T/2\right]$$
$$\iint \gamma_k(\tau',t')\exp\left[i2\pi F\tau_0\right]h_{az}(t - t' - T_e/2 + \Delta t_k)$$
$$\exp\left[-i2\pi F\tau_c(t - t' - T_e/2 + \Delta t_k)\right]\exp\left[-i2\pi\left(F - \Delta f_{p(k)}\right)\tau'\right]d\tau' dt'$$

avec :

$$h_{az}(t) = rect\left[\frac{t}{T_e}\right]g_{az}(t)\exp\left[-i2\pi f_c\tau_c(t)\right] \qquad (4)$$

On s'aperçoit alors que, grâce à l'opération de translation de spectre, on peut exprimer le spectre du signal vidéo brute reçu en réponse à une impulsion de rang k, à partir d'une réponse impulsionnelle en azimut qui ne dépend plus de la fréquence porteuse associée au rang de l'impulsion élémentaire mais uniquement de la fréquence centrale $f_c$ du motif de la forme d'onde à bande synthétique. Le déphasage de l'histoire Doppler est maintenant déterminé par la fréquence porteuse centrale du motif de la forme d'onde à bande synthétique. On remarque cependant la présence d'un retard spécifique à une forme d'onde de rang k au sujet duquel on reviendra par la suite.

Un autre point important à noter est l'influence de la connaissance de l'instant $\tau_0$ à partir duquel on commence à stocker les échantillons numériques sur l'axe distance. En effet, contrairement à la forme d'onde classique, ce terme introduit en raison du changement de fréquence porteuse un déphasage qui dépend du rang de l'impulsion élémentaire considérée. Il a été compensé ici dans le signal de translation de spectre où l'on a considéré le temps absolu $(\tau+\tau_0)$. Si l'on ne compensait pas ce terme de phase d'expression :

$$\exp\left[i2\pi\Delta f_{p(k)}\tau_0\right]$$

on aurait sur l'ensemble de la bande synthétique, des déphasages parasites par sous-bandes dégradant d'une façon importante la réponse impulsionnelle en distance d'un système d'imagerie radar.

En pratique, le signal reçu se présente sous la forme d'échantillons numériques à une fréquence d'échantillonnage $F_e$ adaptée à la bande passante d'une impulsion élémentaire :

$$F_e \cong \frac{1}{B}$$

Cette fréquence d'échantillonnage est insuffisante pour la reconstruction du spectre de fréquence de largeur NxB d'une impulsion unique équivalente aux N impulsions élémentaires de la forme d'onde à bande synthétique. Pour parvenir au spectre d'un signal vidéo brute reçu en retour d'une impulsion d'ordre k, qui soit suréchantillonné et translaté en fréquence, plusieurs solutions sont envisageables.

Une première solution consiste à :

- suréchantillonner, d'un facteur N, le signal vidéo brute reçu en réponse à chaque impulsion élémentaire, en insérant entre chaque échantillon de départ, (N-1) échantillons nuls, cela afin de rendre la nouvelle fréquence d'échantillonnage compatible avec la largeur N fois plus grande de la bande synthétique,
- multiplier le signal vidéo brute suréchantillonné obtenu par le signal de translation de spectre en exponentielle complexe :

$$tr_k(\tau) = \exp\left[i2\pi\Delta f_{p(k)}(\tau + \tau_0)\right]$$

- calculer la transformée de Fourier en distance par DFT du résultat selon la coordonnée distance $\tau$, et
- ne conserver que les échantillons utiles du spectre de fréquence, c'est-à-dire de ceux appartenant à la région spectrale utile de l'impulsion élémentaire traitée.

Pour comprendre l'influence de l'opération de suréchantillonnage sur le résultat de la transformée de Fourier discrète, on compare les résultats obtenus selon que l'on procède ou non au suréchantillonnage. Soient :

- en l'absence de suréchantillonnage, $(x_{k_{0 \leq k < M}})$ les échantillons du signal vidéo brute de réception et $(X_{k_{0 \leq k < M}})$ ceux de la transformée de Fourier discrète qui en résulte et
- en présence d'un suréchantillonnage de rapport N, $(y_{m_{0 \leq m < NM}})$ les suréchantillons du signal vidéo brute de réception et $(Y_{m_{0 \leq m < NM}})$ ceux de la transformée de Fourier discrète qui en résulte.
On a par définition :

$$X_m = \sum_{j=0}^{M-1} x_j e^{-i2\pi\frac{jm}{M}} \quad et \quad Y_m = \sum_{j=0}^{MN-1} y_j e^{-i2\pi\frac{jm}{MN}}$$

En faisant, dans l'expression de Y, le changement de variable j = kN + 1, il vient :

$$Y_m = \sum_{k=0}^{M-1}\sum_{l=0}^{N-1} y_{kN+l} e^{-i2\pi\frac{(kN+l)m}{MN}}$$

ou encore, en tenant compte des suréchantillons nuls :

$$Y_m = \sum_{k=0}^{M-1} y_{kN} e^{-i2\pi \frac{kNm}{MN}} = \sum_{k=0}^{M-1} x_k e^{-i2\pi \frac{km}{M}} = X_{m \bmod M}$$

On constate alors que le spectre du signal suréchantillonné est périodique et formé d'une succession de N répétitions du spectre du signal de départ.

Cette constatation conduit à une solution alternative, moins coûteuse en calcul, pour obtenir le spectre du signal suréchantillonné. En effet, on peut, pour obtenir le spectre du signal suréchantillonné, profiter de sa périodicité pour ne calculer qu'une de ses périodes qui correspond à la transformée de Fourier discrète du signal de départ, puis le compléter par répétition de la période calculée.

Cette solution alternative est compatible avec le souhait initial de translater le spectre du signal de départ d'une fréquence $\Delta f_{p(k)}$ qui peut être supérieure à la fréquence d'échantillonnage $F_e$.

En effet, si l'on applique le signal de translation dont les échantillons sont définis par :

$$tr_k(n) = \exp\left[ i2\pi\Delta f_{p(k)}\left( \frac{n}{F_e} + \tau_0 \right) \right]$$

le signal de départ n'est translaté que de $\Delta f_{p(k)} \bmod F_e$. Mais, étant donné que l'on a reconstruit le spectre du signal suréchantillonné par juxtaposition de N périodes, il vient :

$$Y(F) = \sum_j X\left( F - jF_e - \Delta f_{p(k)} \bmod F_e \right)$$

Comme, de plus, le saut de fréquence $\Delta f_{p(k)}$ est compatible avec la nouvelle fréquence d'échantillonnage $Nf_e$, il existe un indice j tel que :

$$\Delta f_{p(k)} = jF_e + \Delta f_{p(k)} \bmod F_e$$

Ainsi, on obtient bien, par la duplication du spectre du signal de départ, le spectre du signal suréchantillonné à $NF_e$ et translaté de $\Delta f_{p(k)}$.

Cette solution alternative, pour obtenir le spectre du signal vidéo brute reçu en réponse à une impulsion élémentaire d'ordre K, suréchantillonné dans un rapport N et translaté en fréquence de l'écart $\Delta f_{p(k)}$ présenté par la porteuse de cette impulsion de rang k par rapport à la fréquence centrale du motif $f_c$, qui consiste, après avoir translaté en fréquence le signal vidéo brute de réception, à en calculer la transformée de Fourier discrète pour obtenir la période de base du spectre et à juxtaposer N de ces périodes pour obtenir le spectre complet, est très intéressante du point de vue de la quantité de calcul exigée. En effet, elle permet, au premier ordre, de remplacer le calcul de N FFT de grande taille par N FFT de taille plus petite, le rapport de taille étant de l'ordre de N.

Une fois obtenus les spectres élémentaires des signaux vidéo brutes reçus en réponse aux impulsions élémentaires du motif de la forme d'onde à bande synthétique et leurs recadrages effectués, on reconstitue le spectre global du signal de réception en réponse au motif de la forme d'onde à bande synthétique en juxtaposant les différents spectres élémentaires. Du point de vue mathématique, cela revient à construire un signal $V_1(F,t)$ de la forme :

$$V_1\big(F,t\big) = \sum_k V_{1,k}\big(F,t\big) rect\left[\frac{F - \Delta f_{p(k)}}{B}\right]$$

où la présence de la fonction rectangle rappelle que l'on sélectionne dans chaque spectre élémentaire, les cases de fréquence utiles, les autres étant rejetées.

Une fois le spectre global du signal de réception en réponse au motif de forme d'onde à bande synthétique obtenu, on peut procéder à la compression d'impulsion proprement dite. Celle-ci s'obtient en multipliant les échantillons du spectre global par ceux du spectre du filtre adapté. Pour fabriquer les échantillons du spectre du filtre adapté, on s'inspire du cas de la forme d'onde classique tout en respectant les spécificités de la bande synthétique.

Si l'on ne dispose pas de signaux de calibration, on peut, pour fabriquer les échantillons du spectre du filtre adapté, partir des échantillons de l'impulsion élémentaire théorique $p(\tau)$ puis faire subir à ce signal de départ exactement le même traitement que celui qui vient d'être décrit pour le signal reçu. C'est à dire que l'on duplique N fois ce signal pour constituer un motif complet. Pour chacune des impulsions élémentaires, on effectue la translation de spectre et le suréchantillonnage conformément à son indice dans le motif. On obtient ainsi les signaux :

$$X_{1,k}\big(F\big) = P\Big(F - \Delta f_{p(k)}\Big)e^{-i2\pi\big(F - \Delta f_{p(k)}\big)T/2}$$

La construction de la bande synthétique pour ces signaux de référence conduit à :

$$X_1\big(F\big) = \sum_k P\Big(F - \Delta f_{p(k)}\Big)e^{-i2\pi\big(F - \Delta f_{p(k)}\big)T/2} rect\left[\frac{F - \Delta f_{p(k)}}{B}\right]$$

L'expression de la fonction de transfert $H_i$ du filtre adapté est alors données par :

$$H_i\big(F\big) = X_1^*\big(F\big)$$

Afin de contrôler le niveau des lobes secondaires de la réponse impulsionnelle du filtre adapté, on introduit dans l'expression précédente une fenêtre de pondération efficace dans le cas de la forme d'onde traditionnelle. Cette pondération efficace s'écrit sous la forme :

$$W_{eff} = G_{proc}\,rect\left[\frac{F}{NB}\right]\frac{W\big(F\big)}{\big|X_1\big(F\big)\big|^2}$$

où $W(F)$ est la fenêtre de pondération utile et $G_{proc}$ est un facteur constant de compensation du gain apporté par le traitement qui est facultatif.

Ainsi, l'expression complète de la fonction de transfert du filtre adapté est donnée, dans le cas général, par :

$$H_i(F) = G_{proc}\, rect\left[\frac{F}{NB}\right]\frac{W(F)}{|X_1(F)|^2}X_1^*(F)$$

Pour prendre en compte certains défauts de la chaîne émission-réception du radar, on préfère émettre sans rayonnement extérieur d'énergie par l'antenne, recevoir et enregistrer un certain nombre de motifs de forme d'onde à bande synthétique. Après moyennage, on dispose d'un motif de référence avec N impulsions élémentaires caractérisant le comportement de la chaîne émission-réception du radar. On fabrique alors la fonction de transfert du filtre adapté à partir des échantillons numériques de ces impulsions élémentaires de référence de la même façon que pour le motif théorique. Il faut se souvenir cependant qu'il faut tenir compte du $\tau_o$ propre de ces impulsions dans la génération des signaux de translation de fréquence. En effet, le $\tau_o$ des signaux de calibration est en général différent de celui des signaux reçus en fonctionnement normal.

Du point de vue mathématique, le signal $V_2(F,t)$ obtenu après filtrage adapté dans le domaine fréquentiel en distance et temporel en azimut a pour expression :

$$V_2(F,t) = rect\left[\frac{F}{NB}\right]W(F)G_{proc}$$
$$\int \sum_k \exp[i2\pi F\tau_0]\exp[-i2\pi F\tau_c(t-t'-T_e/2+\Delta t_k)]$$
$$rect\left[\frac{F-\Delta f_{p(k)}}{B}\right]h_{az}(t-t'-T_e/2+\Delta t_k)\Gamma_k(F,t')dt'$$

avec :

$$\gamma_k(\tau,t)\xrightarrow{\quad FFT_\tau \quad}\Gamma_k(F,t)$$

En posant :

$$\Gamma_k(F,t) = \Gamma\left(F+\Delta f_{p(k)},t\right)$$

il vient :

$$V_2(F,t) = rect\left[\frac{F}{NB}\right]W(F)G_{proc}$$
$$\int \Gamma(F,t')\exp[i2\pi F\tau_0]\sum_k rect\left[\frac{F-\Delta f_{p(k)}}{B}\right]$$
$$\exp[-i2\pi F\tau_c(t-t'-T_e/2+\Delta t_k)]h_{az}(t-t'-T_e/2+\Delta t_k)dt'$$

Pour retourner dans le domaine temporel en distance, on effectue, sur le signal obtenu, une transformée de Fourier inverse en distance. Cette étape achevée, on a accès à l'information de distance radar-cible nécessaire pour effectuer les opérations de correction des mouvements parasites du porteur du radar ou pour la prise en compte des non stationnarité de la réponse impulsionnelle du système radar.

Le signal $v_{2(\tau,t)}$ obtenu après la transformée de Fourier inverse en distance s'exprime par :

$$v_2(\tau,t) = G_{proc} NB \, \mathrm{wsinc}(NB\tau) *_\tau$$

$$\iint \Gamma(F,t') \exp[i2\pi F\tau_0] \sum_k rect\left[\frac{F - \Delta f_{p(k)}}{B}\right]$$

$$\exp\left[-i2\pi F\tau_c(t - t' - T_e/2 + \Delta t_k)\right] h_{az}(t - t' - T_e/2 + \Delta t_k) e^{i2\pi F\tau} \, dt' dF$$

$$(5)$$

l'opérateur $*\tau$- désignant une convolution sur la coordonnée distance $\tau$.

Cette dernière expression montre que, d'une manière analogue à la forme d'onde traditionnelle, le signal obtenu est le résultat de la convolution entre la réponse impulsionnelle après traitement en distance et le signal recherché, lui-même convolué avec la réponse impulsionnelle en azimut.

Afin de compenser le gain constant apporté par le traitement, il faut donner au facteur de compensation du gain $G_{proc}$ la valeur :

$$G_{proc} = \frac{1}{NB \, \mathrm{wsinc}(0)}$$

D'une façon pratique, la transformée de Fourier inverse en distance est implémentée sous forme d'une TFD.

En examinant plus attentivement, l'expression du signal obtenu $v_2(\tau,t)$, on constate que l'originalité de la forme d'onde à bande synthétique est d'introduire une dépendance de la réponse impulsionnelle en azimut vis à vis de la région spectrale distance considérée, ceci au travers des retards $\Delta t_k$

En revenant à l'expression de la relation (4) détaillant la réponse impulsionnelle en azimut, on voit que la réponse impulsionnelle en azimut introduit un déphasage parasite variable en fonction des $\Delta t_k$ de la forme :

$$dop_k(t - t' - T_e/2 + \Delta t_k) = \exp\left[-i2\pi f_c \tau_c(t - t' - T_e/2 + \Delta t_k)\right]$$

qui traduit l'histoire de phase Doppler en fonction du temps en azimut t affectant une cible ayant une coordonnée azimut t'.

Le temps de propagation aller-retour radar cible $\tau_c$ est fonction de la distance radiale de la cible considérée. C'est une fonction parabolique de la coordonnée temporelle en azimut t qu'il est habituel de modéliser au moyen des paramètres Doppler. En se limitant par soucis de simplicité à un développement limité d'ordre 2 il s'exprime par la relation :

$$\tau_c(t) = \tau_{c0} + \tau'_c(t)$$

$$= \tau_{c0} - \frac{1}{f_c}\left\{f_{dc}t + \frac{1}{2}f_{dr}t^2\right\}$$

$\tau_{c0}$ désignant la coordonnée temporelle en distance $\tau$ de la cible considérée, $f_c$ la fréquence porteuse centrale du motif,

$f_{dc}$ le Doppler moyen et $f_{dr}$ la pente Doppler.

Dans ces conditions, le déphasage parasite variable $dop_k$ () dû à la réponse impulsionnelle en azimut peut s'écrire :

$$dop_k(t) = \exp\left[-i2\pi f_c \tau_{c0}\right]$$
$$\exp\left[i2\pi\left(f_{dc}(t - T_e/2) + f_{dc}\Delta t_k + \frac{1}{2}f_{dr}(t - T_e/2)^2\right.\right.$$
$$\left.\left. + \frac{1}{2}f_{dr}\Delta t_k^2 + f_{dr}\Delta t_k(t - T_e/2)\right)\right]$$

ce qui montre que la réponse impulsionnelle en azimut introduit, en plus d'un déphasage variable en fonction de la distance repéré par la valeur du terme $\tau_{co}$, un déphasage parasite fonction de la sous-bande spectrale considérée, de valeur :

$$\exp\left[i2\pi\left\{+f_{dc}\Delta t_k + \frac{1}{2}f_{dr}\Delta t_k^2 + f_{dr}\Delta t_k(t - T_e/2)\right\}\right]$$

La présence de phases parasites par sous-bandes spectrales introduit des dégradations importantes dans la qualité de la réponse impulsionnelle. Pour s'en convaincre, il suffit de considérer l'exemple simple d'un motif de forme d'onde à bande synthétique où N = 2 et où il existe un déphasage de $\pi$ entre les sous-bandes spectrales. Dans ce cas, au lieu d'avoir une réponse impulsionnelle en azimut en sinus cardinal pondéré analogue à un diagramme de voie somme d'une antenne réseau, on obtient une réponse impulsionnelle en azimut avec deux lobes principaux symétriques et des lobes secondaires élevés analogue à un diagramme de voie différence d'une antenne monopulse.

En ce qui concerne l'expression précédente du déphasage parasite, les deux termes d'ordre 1 en $\Delta t_k$ sont prépondérants. Mais seul le terme de phase :

$$2\pi f_{dc}\Delta t_k$$

ne dépend pas de la coordonnée temporelle t en azimut et peut être compensé pendant le traitement de compression d'impulsion.

Cette compensation est particulièrement intéressante pour les configurations dites dépointées ou SQUINT en anglo-saxon, pour lesquelles le faisceau d'antenne en azimut n'est pas perpendiculaire au vecteur vitesse du porteur du radar (configuration SLAR). En effet, le Doppler moyen $f_{dc}$ est alors important et il est nécessaire d'introduire une compensation du déphasage qu'il engendre si l'on souhaite garantir une bonne qualité de la réponse impulsionnelle après compression d'impulsion.

On note que l'on ne s'est pas occupé du déphasage introduit par le Doppler moyen vis à vis de la fréquence distance par le terme :

$$\exp\left[-i2\pi F\tau_c\left(t - t' - T_e/2 + \Delta t_k\right)\right]$$

apparaissant dans l'expression du signal après compression d'impulsion de la relation (5). Pour compenser ce déphasage, on peut modifier l'expression de la fonction de transfert du filtre adapté en adoptant pour le spectre d'une impulsion élémentaire de rang k, la valeur :

$$X_{1,k}^{(s)}(F) = P\left(F - \Delta f_{p(k)}\right)e^{-i2\pi\left(F - \Delta f_{p(k)}\right)T/2}e^{i2\pi\widetilde{f}_{dc}\Delta t_k}$$

au lieu de :

$$X_{1,k}(F) = P\left(F - \Delta f_{p(k)}\right)e^{-i2\pi\left(F - \Delta f_{p(k)}\right)T/2}$$

où $\widetilde{f}_{dc}$ est un paramètre Doppler d'ordre 1 qui peut, sans que cela soit obligatoire, être égal au Doppler moyen $f_{dc}$ utilisé dans un traitement d'imagerie radar SAR.

Avec cette nouvelle correction de phase, on adopte pour l'expression de la fonction de transfert du filtre adapté la valeur :

$$H_{is}(F) = X_1^{(s)*}(F)$$

avec :

$$X_1^{(s)}(F) = \sum_k rect\left[\frac{F - \Delta f_{p(k)}}{B}\right]P\left(F - \Delta f_{p(k)}\right)e^{-i2\pi\left(F - \Delta f_{p(k)}\right)T/2}e^{i2\pi\widetilde{f}_{dc}\Delta t_k}$$

Après filtrage adapté et transformée de Fourier inverse en distance, on obtient, en final, le signal suivant :

$$v_2(\tau,t) = G_{proc}NB\,\mathrm{wsinc}(NB\tau)*_\tau$$
$$\iint\Gamma(F,t')\exp\left[i2\pi F\tau_0\right]\sum_k rect\left[\frac{F - \Delta f_{p(k)}}{B}\right]$$
$$\exp\left[-i2\pi F\tau_c\left(t - t' - T_e/2 + \Delta t_k\right)\right]\exp\left[-i2\pi\widetilde{f}_{dc}\Delta t_k\right]$$
$$h_{az}\left(t - t' - T_e/2 + \Delta t_k\right)\exp\left[i2\pi F\tau\right]dt'dF$$

$$(6)$$

La figure 3 illustre les principales étapes du traitement de compression d'impulsion qui vient d'être proposé.

Le signal vidéo brute de réception $v_o$ est disponible en sortie du convertisseur analogique-numérique du récepteur du radar, sous la forme d'un tableau d'échantillons complexes à trois dimensions : une dimension k fonction du rang de l'impulsion élémentaire qui en est à l'origine, dans le motif de forme d'onde à bande synthétique, et deux dimensions temporelles, l'une $\tau$, à courte échéance, qui mesure le temps s'écoulant entre les émissions de deux impulsions élémentaires d'un motif de forme d'onde à bande synthétique, qui est représentative du temps de retour d'écho et qui fournit un repérage des cibles selon l'axe distance, et l'autre, t, à plus longue échéance, qui mesure l'ordre de succession des émissions des motifs de forme d'onde à bande synthétique, qui permet l'appréciation de l'effet Doppler sur les échos des cibles et qui fournit un repérage des cibles selon un axe Doppler ou azimut orienté dans la direction de déplacement du radar relativement aux cibles.

La première étape consiste à multiplier, à l'aide d'un banc de multiplicateurs complexes 21, 22,.., 23, les échantillons du signal vidéo brute de réception $v_{0,k}(\tau,t)$ de même rang k par un terme de transposition en fréquence :

$$tr_k\left(\tau\right) = \exp\left[i2\pi\Delta f_{p\left(k\right)}\left(\tau + \tau_0\right)\right]$$

$\Delta f_{p(k)}$ étant l'écart de la fréquence porteuse de la k ème impulsion par rapport à la fréquence porteuse centrale $f_c$ du motif de forme d'onde à bande synthétique, sachant que les impulsions élémentaires ne sont pas dans l'ordre naturel mais permutées pour améliorer l'efficacité du filtre passe-bande de réception, et $\tau_0$ étant le délai après émission d'une impulsion élémentaire à partir duquel on commence à considérer le signal de reçu.

La deuxième étape consiste faire, en 31, 32,..., 33, des analyses spectrales en distance, de suréchantillonnages, dans un rapport N, des signaux vidéo brutes de réception des différents rangs k après leurs translations en fréquence. Elle permet d'obtenir les signaux $V_{1,k}(F,t)$.

La troisième étape consiste à sélectionner, en 41, 42,..., 43 une plage utile dans chacun des spectres de fréquence résultant des analyses spectrales précédentes, chaque plage utile ayant une largeur de bande B correspondant à celle d'une impulsion élémentaire du motif de forme d'onde à bande synthétique et les différentes plages, au nombre de N, étant décalées entre elles conformément aux fréquences porteuses des impulsions élémentaires de rang k auxquels correspondent les signaux analysés, pour recouvrir une bande globale NxB.

La quatrième étape 51 consiste à reconstruire la bande synthétique par juxtaposition des différentes plages sélectionnées dans les analyses spectrales, et à effectuer la compression d'impulsion par filtrage adapté dans le domaine fréquentiel en distance pour obtenir un signal $V_2(F,t)$.

La cinquième et dernière étape 61 consiste en une analyse spectrale inverse en distance permettant de repasser dans le domaine temporel en distance et d'obtenir un signal vidéo brute de réception $v_2(\tau, t)$ à deux dimensions temporelles en distance et en azimut.

La figure 4 détaille une première façon de réaliser une analyse spectrale en distance d'un signal suréchantillonné dans un rapport N, utilisable au cours de la deuxième étape du procédé de compression d'impulsion illustré à la figure précédente. Cette première façon consiste :

- au cours d'une première étape 300, à suréchantillonner, d'un facteur N, le signal avant analyse spectrale en ajoutant (N-1) échantillons nuls entre chaque échantillons de départ, puis
- au cours d'une deuxième étape 301, à effectuer l'analyse spectrale sur le signal suréchantillonné, par exemple, par une transformation de Fourier ou par une méthode haute résolution.

La figure 5 détaille une deuxième façon de réaliser une analyse spectrale en distance d'un signal suréchantillonné dans un rapport N, utilisable au cours de la deuxième étape du procédé de compression d'impulsion illustré à la figure 3. Cette deuxième façon consiste :

- au cours d'une première étape 310, à effectuer l'analyse spectrale sur le signal de départ, par exemple, par une transformation de Fourier ou par une méthode haute résolution, puis
- au cours d'une deuxième étape 311, à dupliquer N fois le spectre de fréquence obtenu.

Cette deuxième façon de faire présente un avantage certain sur la première car elle permet de diminuer la quantité de calcul nécessaire pour les analyses de spectres qui se font sur un nombre moindre d'échantillons.

La figure 6 détaille une première façon de réaliser la reconstruction de la bande synthétique et la compression d'impulsion, utilisable au cours de la quatrième étape du procédé de compression d'impulsion illustré à la figure 3. Cette première façon consiste :

- au cours d'une première étape, à réaliser un filtrage adapté au niveau de chaque composante spectrale $V_{1,k}$ correspondant aux signaux vidéo brutes de réception en retour d'une impulsion élémentaire de rang k, en multipliant à l'aide d'un banc de multiplieurs 511, 512,.., 513, cette composante spectrale $V_{1,k}$ par le conjugué $H_{i,k}$ du spectre de fréquence de l'impulsion élémentaire de rang k :

$$H_{i,k} = X_{1,k}^{*}\left(F\right)$$

avec :

$$X_{1,k}(F) = P\left(F - \Delta f_{p(k)}\right)e^{-i2\pi\left(F - \Delta f_{p(k)}\right)T\cdot 2}$$

où $P(F)$ est le spectre d'une impulsion élémentaire émise à la fréquence porteuse centrale du motif de forme d'onde à bande synthétique et $\Delta f_{p(k)}$ l'écart de la fréquence porteuse de la k ème impulsion par rapport à la fréquence porteuse centrale du motif $f_c$, ou, en variante, pour compenser un déphasage introduit par le Doppler moyen vis à vis de la fréquence distance, avec :

$$X_{1,k}(F) = P\left(F - \Delta f_{p(k)}\right)e^{-i2\pi\left(F - \Delta f_{p(k)}\right)T/2}e^{i2\pi\tilde{f}_{dc}\Delta t_k}$$

puis,

- au cours d'une deuxième étape, à reconstruire le spectre global de la bande synthétique en juxtaposant, au moyen d'un additionneur 514, les spectres de fréquence des différents signaux vidéo brutes de réception qui proviennent des réponses des cibles à l'ensemble des impulsions élémentaires du motif de forme d'onde à bande synthétique émise et qui ont été comprimés en impulsion.

La figure 7 détaille une deuxième façon de réaliser la reconstruction de la bande synthétique et la compression d'impulsion, utilisable au cours de la quatrième étape du procédé de compression d'impulsion illustré à la figure 3. Cette deuxième façon consiste :

- au cours d'une première étape, à reconstruire le spectre global de la bande synthétique en juxtaposant, au moyen d'un additionneur 520, les spectres de fréquence des différents signaux vidéo brute de réception qui proviennent des réponses des cibles à l'ensemble des impulsions élémentaires du motif de la forme d'onde à bande synthétique émise, puis
- au cours d'une deuxième étape, à réaliser un filtrage adapté au niveau de la composante spectrale globale obtenue $V_1$ correspondant aux signaux vidéo brute de réception en retour de l'ensemble des impulsions élémentaires d'un motif de forme d'onde à bande synthétique, en multipliant à l'aide d'un multiplieur 521, cette composante spectrale globale $V_1$ par le conjugué $H_i$ du spectre de fréquence global reconstitué d'un motif de forme d'onde à bande synthétique :

$$H_i = X_1^*(F)$$

avec :

$$X_1(F) = \sum_k P\left(F - \Delta f_{p(k)}\right)e^{-i2\pi\left(F - \Delta f_{p(k)}\right)T\cdot 2}rect\left[\frac{F - \Delta f_{p(k)}}{B}\right]$$

où $P(F)$ est le spectre d'une impulsion élémentaire émise à la fréquence porteuse centrale du motif de forme d'onde à bande synthétique et $\Delta_{fp(k)}$ l'écart de la fréquence porteuse de la k ème impulsion par rapport à la fréquence porteuse centrale du motif $f_c$ ou, en variante, pour compenser un déphasage introduit par le Doppler moyen vis à vis de la fréquence distance, avec :

$$X_1(F) = \sum_k rect\left[\frac{F - \Delta f_{p(k)}}{B}\right] P\left(F - \Delta f_{p(k)}\right) e^{-i2\pi\left(F - \Delta f_{p(k)}\right)T/2} e^{i2\pi\tilde{f}_{dc}\Delta t_k}$$

Les deux façons de faire décrites précédemment pour réaliser la reconstruction de la bande synthétique et la compression d'impulsion sont équivalentes en raison de la distributivité de l'addition, qui permet la reconstruction de la bande synthétique globale, par rapport à la multiplication, qui permet le filtrage adapté.

Après la compression d'impulsion par bande synthétique, le signal vidéo brute de réception d'un radar peut être utilisé à des fins diverses et notamment pour du traitement SAR d'imagerie radar mais il faut alors prendre en compte un terme de déphasage parasite introduit par la compression d'impulsion par bande synthétique.

En effet, on a vu (relation 6) que le signal vidéo brute de réception, après compression d'impulsion par bande synthétique $v_2(\tau,t)$ avait pour expression :

$$v_2(\tau,t) = G_{proc} NB \, \mathrm{wsinc}(NB\tau) *_\tau$$

$$\iint \Gamma(F,t') \exp[i2\pi F \tau_0] \sum_k rect\left[\frac{F - \Delta f_{p(k)}}{B}\right]$$

$$\exp\left[-i2\pi F \tau_c\left(t - t' - T_e/2 + \Delta t_k\right)\right] \exp\left[-i2\pi\tilde{f}_{dc}\Delta t_k\right]$$

$$h_{az}\left(t - t' - T_e/2 + \Delta t_k\right)\exp[i2\pi F \tau] dt' dF$$

La première étape de la partie Doppler proprement dite d'un traitement SAR consiste à prendre la transformée de Fourier du signal comprimé selon l'axe distance. Cela permet en effet de convertir le retard dû au temps de propagation pour chaque cible en un déphasage lié aux paramètres Doppler.

Dans le cas particulier de la forme d'onde à bande synthétique, cette transformée de Fourier en distance donne également explicitement accès aux sous-bandes spectrales en distance pour lesquelles la réponse impulsionnelle en azimut est différente. On a ainsi :

$$V_2(F,t) = R_d(F) \times \int \sum_k h_{az}\left(t - t' - T_e/2 + \Delta t_k\right)\exp\left[-i2\pi\tilde{f}_{dc}\Delta t_k\right]$$

$$\int rect\left[\frac{F' - \Delta f_{p(k)}}{B}\right] \Gamma(F',t') \exp[i2\pi F' \tau_0]$$

$$\exp\left[-i2\pi F' \tau_c\left(t - t' - T_e/2 + \Delta t_k\right)\right] \int e^{i2\pi(F'-F)\tau} d\tau dt' dF'$$

ou encore :

$$V_2(F,t) = R_d(F) \times \Gamma(F,t') \exp[i2\pi F \tau_0] \int \sum_k h_{az}\left(t - t' - T_e/2 + \Delta t_k\right)$$

$$\exp\left[-i2\pi\tilde{f}_{dc}\Delta t_k\right] rect\left[\frac{F - \Delta f_{p(k)}}{B}\right] \exp\left[-i2\pi F \tau_c\left(t - t' - T_e/2 + \Delta t_k\right)\right] dt'$$

La deuxième étape de la partie Doppler d'un traitement d'imagerie radar SAR consiste à prendre la transformée de Fourier en azimut du signal précédent afin de faire apparaître, d'une part la transformée de Fourier du coefficient de retrodiffusion recherché et, d'autre part, la fonction de transfert du système d'imagerie radar en azimut. A l'occasion, la dépendance de cette fonction de transfert vis à vis de la sous-bande spectrale en distance considérée va se révéler clairement sous la forme d'un terme de phase aisément compensable. Il vient alors :

$$V_2(F,f) = R_d(F) \iint \Gamma(F,t') \exp[i2\pi F\tau_0] \sum_k h_{az}(t - t' - T_e/2 + \Delta t_k)$$

$$\exp[-i2\pi\widetilde{f}_{dc}\Delta t_k] rect\left[\frac{F - \Delta f_{p(k)}}{B}\right]$$

$$\exp[-i2\pi F\tau_c(t - t' - T_e/2 + \Delta t_k)] \exp[-i2\pi ft] dt' dt$$

ou :

$$V_2(F,f) = R_d(F) \int \Gamma(F,t') \exp[i2\pi F\tau_0] \exp[-i2\pi ft'] \exp[-i2\pi f\, T_e/2]$$

$$\sum_k rect\left[\frac{F - \Delta f_{p(k)}}{B}\right] \exp[-i2\pi\widetilde{f}_{dc}\Delta t_k] \exp[i2\pi f\Delta t_k] dt'$$

$$\int h_{az}(y) \exp[-i2\pi F\tau_c(y)] \exp[-i2\pi fy] dy$$

ou encore :

$$V_2(F,f) = R_d(F) \exp[i2\pi F(\tau_0 - \tau_{c0})] \Gamma(F,f) H_{az}(F,f)$$

$$\sum_k rect\left[\frac{F - \Delta f_{p(k)}}{B}\right] \exp[-i2\pi\widetilde{f}_{dc}\Delta t_k] \exp[i2\pi f\Delta t_k]$$

$$(7)$$

où $H_{az}$ désigne la fonction de transfert en azimut du système d'imagerie radar telle que :

$$H_{az}(F,f) = \exp[-i2\pi f\, T_e/2]$$

$$\int rect\left[\frac{t}{T_e}\right] g_{az}(t) \exp[-i2\pi(F + f_c)\tau_c(t)] \exp[-i2\pi ft] dt$$

En utilisant la modélisation du temps aller-retour cible $\tau_c$ à l'aide des paramètres Doppler, cette fonction de transfert s'écrit également :

$$H_{az}(F,f) = \exp[-i2\pi f \, T_e/2] \int rect\left[\frac{t}{T_e}\right] g_{az}(t)$$

$$\exp\left[i2\pi\left(1+\frac{F}{f_c}\right)\left(f_{dc}t + \frac{1}{2}f_{dr}t^2 + \frac{1}{6}t^3\cdots\right)\right]\exp[-i2\pi ft]dt$$

En revenant à la relation (7), on constate la présence d'un terme de phase parasite :

$$\exp\left[i2\pi\left(f - \tilde{f}_{dc}\right)\Delta t_k\right]$$

qui est dû à la compression d'impulsion d'une forme d'onde à bande synthétique et qui dépend de la sous-bande spectrale associée à l'impulsion élémentaire de rang k.

Pour compenser ce terme de phase parasite, on propose d'ajouter un terme de phase correcteur :

$$\sum_k rect\left[\frac{F - \Delta f_{p(k)}}{B}\right]\exp\left[-i2\pi\left(f - \tilde{f}_{dc}\right)\Delta t_k\right]$$

à l'expression du filtre adapté en azimut adopté pour une forme d'onde traditionnelle.

On rappelle, que l'expression du filtre adapté en azimut pour un traitement d'imagerie radar SAR est donnée, en première approximation, par :

$$H_a(F,f) = H_{az}^*(F,f)$$

une fenêtre de pondération efficace étant souvent introduite pour limiter le niveau des lobes secondaires de la réponse impulsionnelle en azimut, avec pour expression :

$$W_{eff}(f) = G_{proc}\,rect\left[\frac{f}{B_d}\right]\frac{W(f)}{\left|H_{az}(F,f)\right|^2}$$

où W(F) est la fenêtre de pondération utile et $G_{proc}$ un facteur facultatif de compensation du gain apporté par le traitement tel que :

$$G_{proc} = \frac{F_r}{B_d \, \text{wsinc}(0)}$$

F, étant la fréquence de répétition du motif de forme d'onde à bande synthétique.

Ainsi, avec la forme d'onde traditionnelle, on adopte, en général, pour expression du filtre adapté, une relation de la forme :

$$H_a(F,f) = G_{proc} rect\left[\frac{f}{B_d}\right]\frac{W(f)}{|H_{az}(F,f)|^2} H_{az}^*(F,f)$$

Avec la forme d'onde à bande synthétique, on adoptera, pour tenir compte du terme de phase parasite introduit par la compression d'impulsion à bande synthétique, une expression de filtre adapté de la forme :

$$H_{as}(F,f) = G_{proc} rect\left[\frac{f}{B_d}\right]\frac{W(f)}{|H_{az}(F,f)|^2} H_{az}^*(F,f)$$

$$\sum_k rect\left[\frac{F - \Delta f_{p(k)}}{B}\right]e^{-i2\pi\left(f - \tilde{f}_{dc}\right)\Delta t_k}$$

Après filtrage adapté et retour dans les domaines temporels en distance et azimut par transformée de Fourier inverse en azimut puis transformée de Fourier inverse en distance, on obtient le signal suivant :

$$v_3(\tau,t) = \mathrm{wsinc}(B\tau)\,\mathrm{wsinc}(B_d t)*_{\tau,t}\,\gamma(\tau + \tau_0 - \tau_{c0}, t)$$

produit d'une convolution de la réponse impulsionnelle après traitement, constituée du produit de deux sinus cardinaux pondérés indépendants, par le signal de rétrodiffusion complexe des cibles translaté en distance pour tenir compte du stockage des échantillons numériques du signal vidéo brute de réception dans une fenêtre d'analyse débutant à l'instant $\tau_0$.

La figure 8 illustre les étapes d'un traitement d'imagerie radar SAR après compression d'impulsion par bande synthétique.

La première étape 61 consiste à effectuer une transformée de Fourier suivant l'axe distance sur le tableau $v_2$ ($\tau,t$) des échantillons du signal reçu, issu du traitement de compression d'impulsion par bande synthétique illustré à la figure 3. Cette opération permet de récupérer un tableau d'échantillons $V_2$ ($F, t$) à variable fréquentielle F en distance. Bien qu'elle semble être une répétition de l'analyse spectrale en distance faite à l'occasion du traitement de compression d'impulsion, elle a son utilité car elle permet un fractionnement préalable selon des plages restreintes de l'axe distance pour tenir compte de la non stationarité de l'effet Doppler selon cet axe. Ce fractionnement conduit à répéter les opérations sur les différentes fractions du tableau d'échantillons avec des transformées de Fourier en distance plus simples car portant sur un nombre moindre de points. Le bilan en quantité de calcul est souvent favorable.

La deuxième étape consiste à effectuer une transformée de Fourier 62 en azimut pour récupérer un tableau d'échantillons $V_2(F,f)$ à variables fréquentielles à la fois en distance et en azimut.

La troisième étape consiste à faire le filtrage adapté en multipliant, dans un multiplicateur complexe 63, les échantillons du tableau $V_2(F,f)$ par la fonction de transfert :

$$H_{as}(F,f) = G_{proc} rect\left[\frac{f}{B_d}\right]\frac{W(f)}{|H_{az}(F,f)|^2} H_{az}^*(F,f)$$

$$\sum_k rect\left[\frac{F - \Delta f_{p(k)}}{B}\right]e^{-i2\pi\left(f - \tilde{f}_{dc}\right)\Delta t_k}$$

prenant en compte une compensation de phase tenant au traitement préalable de compression d'impulsion par bande synthétique, avec une valeur différente en fonction des régions spectrales distance considérées.

La quatrième étape consiste à effectuer une transformée de Fourier inverse 64 en azimut pour repasser dans le domaine temporel en azimut.

La cinquième et dernière étape consiste à effectuer une transformée de Fourier invers 65 en distance afin de repasser également dans le domaine temporel en distance et obtenir un tableau $v_3(\tau,t)$ des échantillons des signaux de rétrodiffusion des cibles permettant de tracer une image en deux dimensions selon les axes distance et azimut.

## Revendications

1. Procédé de compression d'impulsion très haute résolution distance pour radar ou sonar **caractérisé en ce qu'**il consiste :

   - à utiliser à l'émission un motif répétitif de forme d'onde à bande synthétique constitué d'une suite de N impulsions élémentaires cohérentes modulées linéairement en fréquence, se succédant à une fréquence de récurrence $F_r$, de spectres de fréquence rectangulaires de bande élémentaire B et de fréquences porteuses échelonnées de manière que leurs spectres de fréquence viennent se raccorder de façon exacte dans le prolongement les uns des autres pour former un spectre de fréquence global de largeur NxB, les dites N impulsions élémentaires se succédant dans un ordre quelconque correspondant par une permutation $p(k)$à l'ordre naturel par fréquences porteuses croissantes ;
   - à démoduler en réception le signal reçu en retour de chaque impulsion élémentaire par la fréquence porteuse de l'impulsion élémentaire considérée afin d'en extraire l'enveloppe complexe ;
   - à filtrer les signaux reçus et démodulés par un filtre passant la bande de fréquence B d'une impulsion élémentaire ;
   - à échantillonner les signaux reçus, démodulés et filtrés à une fréquence d'échantillonnage de l'ordre de la bande B des impulsions élémentaires, selon deux échelles de temps : l'une à courte échéance, de variable $\tau$ mesurant le temps s'écoulant entre deux impulsions successives d'un motif de la forme d'onde d'émission et assurant un repérage de cibles selon un axe distance, l'autre à plus longue échéance de variable t, mesurant la succession des motifs de la forme d'onde d'émission et assurant un repérage de cibles selon un axe Doppler ou azimut parallèle à la direction de déplacement du radar ou du sonar par rapport aux cibles;
   - à translater le spectre de fréquence du signal reçu en retour d'une K ème impulsion afin de le remettre à sa place au sein du spectre de fréquence du motif global de la forme d'onde émise en multipliant les échantillons du signal en retour d'une k ème impulsion élémentaire par une exponentielle complexe fonction de la variable temporelle $\tau$ suivant l'axe distance :

$$t_r^k(\tau) = \exp\left\{i2\pi \Delta f_{p(k)}(\tau + \tau_0)\right\}$$

   $\tau$o étant le délai au bout duquel on commence à stocker les échantillons numériques sur l'axe distance, $\Delta f_{p(k)}$ étant l'écart de fréquence porteuse de la k ème impulsion élémentaire par rapport à la fréquence porteuse centrale $f_c$ du motif ;
   - à effectuer une analyse spectrale en distance d'un suréchantillonnage, dans un rapport N, des échantillons complexes translatés en fréquence pour passer, en distance, du domaine temporel à variable $\tau$ à un domaine fréquentiel à variable F et obtenir un spectre de fréquence échantillonné pour le signal de retour de chaque impulsion élémentaire;
   - à sélectionner dans le spectre de fréquence en distance obtenu pour le signal reçu en retour d'une k ème impulsion élémentaire, les échantillons appartenant à une plage centrée autour de $\Delta f_{p(k)}$ avec une largeur égale à celle de la bande B d'une impulsion élémentaire;
   - à construire, à partir des échantillons des plages sélectionnées des spectres de fréquence en distance des signaux en retour des impulsions élémentaires, un échantillonnage du produit du spectre de fréquence global en distance du signal reçu en retour de l'ensemble des impulsions élémentaires d'un motif de forme d'onde à bande synthétique, par le conjugué du spectre de fréquence global des impulsions élémentaires d'un motif de forme d'onde à bande synthétique afin de réaliser un filtrage adapté globalement à la forme d'onde à bande synthétique, et
   - à effectuer une analyse spectrale inverse en distance pour retourner dans le domaine temporel en distance et obtenir un signal reçu comprimé en distance.

2. Procédé selon la revendication 1, **caractérisé en ce que** l'analyse spectrale en distance d'un suréchantillonnage, dans un rapport N, des échantillons translatés en fréquence du signal reçu en retour d'une impulsion élémentaire d'ordre k consiste :

- à suréchantillonner, dans un rapport N, les échantillons complexes translatés en fréquence du signal vidéo brute reçu en retour d'une impulsion élémentaire de rang k, par insertion entre chacun d'eux N-1 échantillons nuls, et
- à effectuer une transformée de Fourier discrète en distance sur les suréchantillons obtenus pour passer, en distance, du domaine temporel à variable $\tau$ à un domaine fréquentiel à variable F.

3. Procédé selon la revendication 1, **caractérisé en ce que** l'analyse spectrale en distance d'un suréchantillonnage, dans un rapport N, des échantillons translatés en fréquence du signal reçu en retour d'une impulsion élémentaire d'ordre k consiste :

- à effectuer une transformée de Fourier discrète en distance sur les échantillons complexes translatés en fréquence pour passer en distance du domaine temporel à variable $\tau$ à un domaine fréquentiel à variable F, et
- à dupliquer N fois le spectre de fréquence échantillonné obtenu.

4. Procédé selon la revendication 1, **caractérisé en ce que** la construction de l'échantillonnage du produit du spectre de fréquence global du signal reçu par le conjugué du spectre de fréquence global d'un motif de forme d'onde à bande synthétique consiste :

- à multiplier les échantillons de la plage sélectionnée du spectre de fréquence en distance du signal reçu en retour d'une k ème impulsion élémentaire par le conjugué $X_{1,k}^{*}\left(F\right)$ du spectre de fréquence de cette k ème impulsion élémentaire émise, de manière à réaliser un filtrage adapté, $X_{1,k}(f)$ répondant à la relation :

$$X_{1,k}\left(F\right) = P\left(F - \Delta f_{p(k)}\right)e^{-i2\pi\left(F - \Delta f_{p(k)}\right)T/2}$$

où $P(F)$ est le spectre d'une impulsion élémentaire émise à la fréquence porteuse centrale du motif de forme d'onde à bande synthétique, et

- à juxtaposer les plages de spectre de fréquence obtenues pour les signaux reçus en retour des impulsions élémentaires après filtrages adaptés, pour engendrer un spectre global de fréquence qui correspondrait à celui d'un signal obtenu en réponse à une impulsion unique modulée linéairement en fréquence de bande NxB, après un filtrage adapté.

5. Procédé selon la revendication 1, **caractérisé en ce que** la construction de l'échantillonnage du produit du spectre de fréquence global du signal reçu par le conjugué du spectre de fréquence global d'un motif de forme d'onde à bande synthétique consiste :

- à multiplier les échantillons de la plage sélectionnée du spectre de fréquence en distance du signal reçu en retour d'une k ème impulsion élémentaire par le conjugué $X_{1,k}^{(s)*}\left(F\right)$ du spectre de fréquence de cette k ème impulsion élémentaire émise, de manière à réaliser un filtrage adapté, $X_{1,k}^{(s)}(f)$ répondant à la relation:

$$X_{1,k}^{(s)}\left(F\right) = P\left(F - \Delta f_{p(k)}\right)e^{-i2\pi\left(F - \Delta f_{p(k)}\right)T/2}e^{i2\pi\tilde{f}_{dc}\Delta t_{k}}$$

où $P(F)$ est le spectre d'une impulsion élémentaire émise à la fréquence porteuse centrale du motif de forme d'onde à bande synthétique et $\tilde{f}_{dc}$ un parmètre Doppler moyen traduisant l'influence de la variable temporelle en azimut t sur le temps de propagation aller-retour radar cible, et

- à juxtaposer les plages de spectre de fréquence obtenues pour les signaux reçus en retour des impulsions élémentaires après filtrages adaptés, pour engendrer un spectre global de fréquence qui correspondrait à celui d'un signal obtenu en réponse à une impulsion unique modulée linéairement en fréquence de bande NxB, après un filtrage adapté.

6. Procédé selon la revendication 1 , **caractérisé en ce que** la construction de l'échantillonnage du produit du spectre de fréquence global du signal reçu par le conjugué du spectre de fréquence global d'un motif de forme d'onde à bande synthétique consiste :

- à juxtaposer les échantillons des plages sélectionnées des spectres de fréquence des signaux reçus en retour des impulsions élémentaires, et

- à multiplier les échantillons du spectre de fréquence global obtenu par le conjugué $X_1^*\left(F\right)$ du spectre de fréquence global résultant de la juxtaposition des spectres de fréquence des impulsions élémentaires émises, $X_1(F)$ répondant à la relation :

$$X_1(F) = \sum_k P\left(F - \Delta f_{p(k)}\right)e^{-i2\pi\left(F - \Delta f_{p(k)}\right)T/2}rect\left[\frac{F - \Delta f_{p(k)}}{B}\right]$$

où $P(F)$ est le spectre d'une impulsion élémentaire émise à la fréquence porteuse centrale du motif de forme d'onde à bande synthétique.

7. Procédé selon la revendication 1, **caractérisé en ce que** la construction de l'échantillonnage du produit du spectre de fréquence global du signal reçu par le conjugué du spectre de fréquence global d'un motif de forme d'onde à bande synthétique consiste :

- à juxtaposer les échantillons des plages sélectionnées des spectres de fréquence des signaux reçus en retour des impulsions élémentaires, et

- à multiplier les échantillons du spectre de fréquence global obtenu par le conjugué $X_1^{(s)*}\left(F\right)$ du spectre de fréquence global résultant de la juxtaposition des spectres de fréquence des impulsions élémentaires émises, $X_1^{(s)}\left(F\right)$ répondant à la relation :

$$X_1^{(s)}(F) = \sum_k rect\left[\frac{F - \Delta f_{p(k)}}{B}\right]P\left(F - \Delta f_{p(k)}\right)e^{-i2\pi\left(F - \Delta f_{p(k)}\right)T/2}e^{i2\pi\tilde{f}_{dc}\Delta t_k}$$

où $P(F)$ est le spectre d'une impulsion élémentaire émise à la fréquence porteuse centrale du motif de forme d'onde à bande synthétique et $\tilde{f}_{dc}$ un parmètre Doppler moyen traduisant l'influence de la variable temporelle en azimut t sur le temps de propagation aller-retour radar cible.

8. Procédé selon la revendication 1, **caractérisé en ce qu'**il consiste en outre à réaliser un traitement complémentaire d'initialisation pour traitement Doppler sur les échantillons du signal reçu comprimé en distance, classés en un tableau à deux dimensions $v_2(\tau,t)$, en fonction des deux variables temporelles $\tau$ selon l'axe distance et t selon l'axe azimut, ledit traitement complémentaire consistant, après avoir effectué successivement une transformée de Fourier en distance puis une transformée de Fourier en azimut sur le signal pour passer dans les domaines fréquentiels en distance avec une variable fréquentielle F et en azimut avec une variable fréquentielle f et obtenir un tableau d'échantillons $V_2(F,f)$, à multiplier les séquences d'échantillons appartenant aux différentes régions spectrales distance des impulsions élémentaires partageant en N sous-bandes de largeur B, la bande NxB de la variable fréquentielle F, par un terme correctif de phase tel que :

$$\exp\left\{-i2\pi\left(f - \tilde{f}_{dc}\right)\Delta t_k\right\}$$

où $\Delta t_k$ est le délai séparant la k ème impulsion considérée du milieu du motif de la forme d'onde d'émission dont elle fait partie et $\tilde{f}_{dc}$ un paramètre Doppler moyen traduisant l'influence de la variable temporelle t sur le temps de propagation aller-retour radar cible.

**Claims**

1. Very high distance resolution pulse compression process for radar or sonar **characterized in that** it consists:

    - in using on transmission a synthetic-band repetitive waveform pattern consisting of a string of N linearly frequency-modulated coherent elementary pulses following one another at a recurrence frequency $F_r$, of rectangular frequency spectra of elementary band B and of stepped carrier frequencies such that their frequency spectra will link up exactly one ahead of another to form a global frequency spectrum of width N×B, the said N elementary pulses following one another in any order corresponding via a permutation p(k) to the natural order based on increasing carrier frequencies;
    - in demodulating at reception the signal received in return for each elementary pulse by the carrier frequency of the relevant elementary pulse so as to extract the complex envelope therefrom;
    - in filtering the signals received and demodulated by a filter which passes the frequency band B of an elementary pulse;
    - in sampling the signals received, demodulated and filtered at a sampling frequency of the order of the band B of the elementary pulses, according to two time scales: one short-term scale, with variable $\tau$ measuring the time which elapses between two successive pulses of a pattern of the transmission waveform and catering for a tagging of targets along a distance axis, the other a longer-term scale with variable t, measuring the succession of patterns of the transmission waveform and catering for a tagging of targets along a Doppler or azimuth axis parallel to the direction of movement of the radar or of the sonar with respect to the targets;
    - in translating the frequency spectrum of the signal received in return for a Kth pulse so as to set it back in its place within the frequency spectrum of the global pattern of the transmitted waveform by multiplying the samples of the return signal for a kth elementary pulse by a complex exponential dependent on the time variable $\tau$ along the distance axis:

$$t_r^k(\tau) = \exp\left\{i2\pi\Delta f_{p(k)}\left(\tau + \tau_0\right)\right\}$$

    $\tau_0$ being the lag after which storage of the digital samples on the distance axis begins, $\Delta f_{p(k)}$ being the carrier frequency gap of the kth elementary pulse with respect to the central carrier frequency $f_c$ of the pattern;
    - in performing a distancewise spectral analysis of an oversampling, in a ratio N, of the frequency-translated complex samples so as to go, distancewise, from the time domain with variable $\tau$ to a frequency domain with variable F and obtain a sampled frequency spectrum for the return signal of each elementary pulse;
    - in selecting from the distancewise frequency spectrum obtained for the signal received in return for a kth elementary pulse, the samples belonging to a span centred around $\Delta f_{p(k)}$ with a width equal to that of the band B of an elementary pulse;
    - in constructing, from the samples of the selected spans of the distancewise frequency spectra of the signals in return for the elementary pulses, a sampling of the product of the global distancewise frequency spectrum of the signal received in return for the set of elementary pulses of a synthetic-band waveform pattern, times the conjugate of the global frequency spectrum of the elementary pulses of a synthetic-band waveform pattern so as to carry out filtering matched globally to the synthetic-band waveform, and
- in performing a distancewise inverse spectral analysis so as to return to the distancewise time domain and obtain a distance-compressed received signal.

2. Process according to Claim 1, **characterized in that** the distancewise spectral analysis of an oversampling, in a ratio N, of the frequency-translated samples of the signal received in return for an elementary pulse of order k consists:

   - in oversampling, in a ratio N, the frequency-translated complex samples of the raw video signal received in return for an elementary pulse of rank k, by inserting N-1 null samples between each of them, and
   - in performing a distancewise discrete Fourier transform on the oversamples obtained so as to go, distancewise, from the time domain with variable $\tau$ to a frequency domain with variable F.

3. Process according to Claim 1, **characterized in that** the distancewise spectral analysis of an oversampling, in a ratio N, of the frequency-translated samples of the signal received in return for an elementary pulse of order k consists:

   - in performing a distancewise discrete Fourier transform on the frequency-translated complex samples so as to go distancewise from the time domain with variable $\tau$ to a frequency domain with variable F, and
   - in duplicating N times the sampled frequency spectrum obtained.

4. Process according to Claim 1, **characterized in that** the construction of the sampling of the product of the global frequency spectrum of the signal received times the conjugate of the global frequency spectrum of a synthetic-band waveform pattern consists:

   - in multiplying the samples of the selected span of the distancewise frequency spectrum of the signal received in return for a kth elementary pulse by the conjugate $X_{1,k}^{*}(F)$ of the frequency spectrum of this kth transmitted elementary pulse, so as to carry out a matched filtering, $X_{1,k}(f)$ complying with the relation:

$$X_{1,k}(F) = P\left(F - \Delta f_{p(k)}\right)e^{-i2\pi\left(F - \Delta f_{p(k)}\right)T/2}$$

   where $P(F)$ is the spectrum of an elementary pulse transmitted at the central carrier frequency of the synthetic-band waveform pattern, and

   - in juxtaposing the frequency spectrum spans obtained for the signals received in return for the elementary pulses after matched filterings, so as to produce a global frequency spectrum which would correspond to that of a signal obtained in response to a linearly frequency-modulated single pulse of band NXB, after matched filtering.

5. Process according to Claim 1, **characterized in that** the construction of the sampling of the product of the global frequency spectrum of the signal received times the conjugate of the global frequency spectrum of a synthetic-band waveform pattern consists:

   - in multiplying the samples of the selected span of the distancewise frequency spectrum of the signal received in return for a kth elementary pulse by the conjugate $X_{1,k}^{(s)*}(F)$ of the frequency spectrum of this kth transmitted elementary pulse, so as to carry out a matched filtering, $X_{1,k}^{(s)}(f)$ complying with the relation:

$$X_{1,k}^{(s)}(F) = P\left(F - \Delta f_{p(k)}\right)e^{-i2\pi\left(F - \Delta f_{p(k)}\right)T/2}e^{i2\pi\tilde{f}_{dc}\Delta t_k}$$

where $P(F)$ is the spectrum of an elementary pulse transmitted at the central carrier frequency of the synthetic-band waveform pattern and $\tilde{f}_{dc}$ a mean Doppler parmeter conveying the influence of the azimuthal time variable t on the radar/target outward/return propagation time, and

- in juxtaposing the frequency spectrum spans obtained for the signals received in return for the elementary pulses after matched filterings, so as to produce a global frequency spectrum which would correspond to that of a signal obtained in response to a linearly frequency-modulated single pulse of band N×B, after matched filtering.

6. Process according to Claim 1, **characterized in that** the construction of the sampling of the product of the global frequency spectrum of the signal received times the conjugate of the global frequency spectrum of a synthetic-band waveform pattern consists:

- in juxtaposing the samples of the selected spans of the frequency spectra of the signals received in return for the elementary pulses, and

- in multiplying the samples of the global frequency spectrum obtained by the conjugate $X_1^{*}(F)$ of the global frequency spectrum resulting from the juxtaposition of the frequency spectra of the elementary pulses transmitted, $X_1(F)$ complying with the relation:

$$X_1(F) = \sum_k P\left(F - \Delta f_{p(k)}\right)e^{-i2\pi\left(F - \Delta f_{p(k)}\right)T/2}rect\left[\frac{F - \Delta f_{p(k)}}{B}\right]$$

where $P(F)$ is the spectrum of an elementary pulse transmitted at the central carrier frequency of the synthetic-band waveform pattern.

7. Process according to Claim 1, **characterized in that** the construction of the sampling of the product of the global frequency spectrum of the signal received times the conjugate of the global frequency spectrum of a synthetic-band waveform pattern consists:

- in juxtaposing the samples of the selected spans of the frequency spectra of the signals received in return for the elementary pulses, and

- in multiplying the samples of the global frequency spectrum obtained by the conjugate $X_1^{(s)*}(F)$ of the global frequency spectrum resulting from the juxtaposition of the frequency spectra of the elementary pulses transmitted, $X_1^{(s)}(F)$ complying with the relation:

$$X_1^{(s)}(F) = \sum_k rect\left[\frac{F - \Delta f_{p(k)}}{B}\right]P\left(F - \Delta f_{p(k)}\right)e^{-i2\pi\left(F - \Delta f_{p(k)}\right)T/2}e^{i2\pi\tilde{f}_{dc}\Delta t_k}$$

where $P(F)$ is the spectrum of an elementary pulse transmitted at the central carrier frequency of the synthetic-band waveform pattern and $\tilde{f}_{dc}$ a mean Doppler parmeter conveying the influence of the azimuthal time variable t on the radar/target outward/return propagation time.

8. Process according to Claim 1, **characterized in that** it furthermore consists in carrying out a complementary initialization processing in respect of Doppler processing on the samples of the distance-compressed signal received, arrayed as a two-dimensional table $v_2(\tau, t)$ as a function of the two time variables $\tau$ along the distance axis and t along the azimuth axis, the said complementary processing consisting, after having performed in succession a distancewise Fourier transform and then an azimuthal Fourier transform on the signal so as to go into the distancewise frequency domain with a frequency variable F and azimuthal frequency domain with a frequency variable f and obtain a table of samples $V_2(F,f)$, in multiplying the sequences of samples belonging to the various distance spectral regions of the elementary pulses splitting into N sub-bands of width B, the band N$\times$B of the frequency variable F, by a phase corrective term such that:

$$\exp\left\{-i2\pi\left(f - \tilde{f}_{dc}\right)\Delta t_k\right\}$$

where $\Delta t_k$ is the lag separating the kth relevant pulse from the middle of the pattern of the transmission waveform of which it forms part and $\tilde{f}_{dc}$ a mean Doppler parameter conveying the influence of the time variable t on the radar/target outward/return propagation time.


**Patentansprüche**

1. Verfahren zur Impulskompression mit sehr hoher Auflösung innerhalb eines Entfernungsbereichs für einen Radar oder Sonar, **dadurch gekennzeichnet, dass** es darin besteht:

- auf der Sendeseite ein wiederkehrendes Wellenformmuster mit synthetischem Band zu verwenden, bestehend aus einer Folge von N linear frequenzmodulierten, kohärenten Elementarimpulsen, die mit einer Wiederholfrequenz $F_r$ aufeinander folgen, rechteckigen Frequenzspektren mit einem Elementarband B und derart gestuften Trägerfrequenzen, dass ihre Frequenzspektren exakt in der gegenseitigen Verlängerung aneinander anschließen, um ein globales Frequenzspektrum der Breite NxB zu bilden, wobei die N Elementarimpulse in einer beliebigen Ordnung aufeinander folgen, die durch eine Permutation p(k) der natürlichen Ordnung durch zunehmende Trägerfrequenzen entspricht;
- auf der Empfangsseite das von jedem Elementarimpuls rückempfangene Signal mit der Trägerfrequenz des betrachteten Elementarimpulses zu demodulieren, um daraus die komplexe Hüllkurve zu entnehmen;
- die empfangene und demodulierten Signale durch ein Filter zu filtern, das das Frequenzband B eines Elementarimpulses durchlässt;
- die empfangenen, demodulierten und gefilterten Signale mit einer Tastfrequenz in der Größenordnung des Bands B der Elementarimpulse gemäß zwei Zeitskalen abzutasten: die eine kurzfristig, mit einer Variablen $\tau$, die die Zeit misst, die zwischen zwei aufeinanderfolgenden Impulsen eines Musters der Sendewellenform vergeht und eine Markierung von Zielen gemäß einer Entfernungsachse gewährleistet, die andere längerfristig mit einer Variablen t, die die Folge der Muster der Sendewellenform misst und eine Markierung von Zielen gemäß einer Doppler-Achse oder Azimut-Achse parallel zur Bewegungsrichtung des Radars oder des Sonars bezüglich der Ziele gewährleistet;
- das Frequenzspektrum des von einem K-ten Impuls rückempfangenen Signals zu verschieben, um es an seinen Platz innerhalb des Frequenzspektrums des globalen Musters der gesendeten Wellenform zurückzubringen, indem die Tastproben des von einem K-ten Elementarimpuls rückempfangenen Signals mit einer komplexen Exponentialen abhängig von der zeitlichen Variablen $\tau$ gemäß der Entfernungsachse multipliziert werden:

$$t_r^k(\tau) = \exp\left\{i2\pi\,\Delta f_{p(k)}\left(\tau + \tau_0\right)\right\}$$

wobei $\tau_0$ die Verzögerung ist, an deren Ende man beginnt, die digitalen Tastproben auf der Entfernungsachse zu speichern, $\Delta f_{p(k)}$ die Trägerfrequenzabweichung des k-ten Elementarimpulses bezüglich der zentralen Trägerfrequenz $f_c$ des Musters ist;

- eine Spektralanalyse innerhalb eines Entfernungsbereichs einer Überabtastung in einem Verhältnis N der komplexen frequenzverschobenen Tastproben durchzuführen, um innerhalb eines Entfernungsbereichs vom Zeitbereich mit der Variablen $\tau$ zu einem Frequenzbereich mit der Variablen F zu gehen und ein getastetes Frequenzspektrum für das Rücksignal jedes Elementarimpulses zu erhalten;
- in dem erhaltenen Frequenzspektrum innerhalb eines Entfernungsbereichs für das von einem k-ten Elementarimpuls rückempfangene Signal die Tastproben auszuwählen, die zu einem um $\Delta f_{p(k)}$ zentrierten Bereich mit einer Breite gleich derjenigen des Bands B eines Elementarimpulses gehören;
- ausgehend von den Tastproben der ausgewählten Bereiche der Frequenzspektren innerhalb eines Entfernungsbereichs der Rücksignale der Elementarimpulse eine Abtastung des Produkts des globalen Frequenzspektrums innerhalb eines Entfernungsbereichs des von der Einheit der Elementarimpulse eines Wellenformmusters mit synthetischem Band rückempfangenen Signals mit der Konjugierten des globalen Frequenzspektrums der Elementarimpulse eines Wellenformmusters mit synthetischem Band zu konstruieren, um global eine an die Wellenform mit synthetischem Band angepasste Filterung durchzuführen, und
- eine umgekehrte Spektralanalyse innerhalb eines Entfernungsbereichs durchzuführen, um in den Zeitbereich innerhalb eines Entfernungsbereichs zurückzukommen und ein innerhalb eines Entfernungsbereichs komprimiertes empfangenes Signal zu erhalten.

2. Verfahren nach Anspruch 1, **dadurch gekennzeichnet, dass** die Spektralanalyse innerhalb eines Entfernungsbereichs einer Überabtastung in einem Verhältnis N der frequenzverschobenen Tastproben des von einem Elementarimpuls der Ordnung k rückempfangenen Signals darin besteht:

- in einem Verhältnis N die komplexen frequenzverschobenen Tastproben des von einem Elementarimpuls des Rangs k rückempfangenen unaufbereiteten Videosignals durch Einfügen zwischen jedes von ihnen von N-1 Tastproben Null überabzutasten, und
- eine diskrete Fourier-Transformation innerhalb eines Entfernungsbereichs an den erhaltenen Überabtastproben durchzuführen, um innerhalb eines Entfernungsbereichs vom Zeitbereich mit einer Variablen $\tau$ zu einem Frequenzbereich mit einer Variablen F überzugehen.

3. Verfahren nach Anspruch 1, **dadurch gekennzeichnet, dass** die Spektralanalyse innerhalb eines Entfernungsbereichs einer Überabtastung, in einem Verhältnis N, der frequenzverschobenen Tastproben des von einem Elementarimpuls der Ordnung k rückempfangenen Signals darin besteht:

- eine diskrete Fourier-Transformation innerhalb eines Entfernungsbereichs an den komplexen frequenzverschobenen Tastproben durchzuführen, um innerhalb eines Entfernungsbereichs vom Zeitbereich mit einer Variablen $\tau$ zu einem Frequenzbereich mit einer Variablen F überzugehen, und
- das erhaltene abgetastete Frequenzspektrum N mal zu duplizieren.

4. Verfahren nach Anspruch 1, **dadurch gekennzeichnet, dass** die Konstruktion der Abtastung des Produkts des globalen Frequenzspektrums des empfangenen Signals mit der Konjugierten des globalen Frequenzspektrums eines Wellenformmusters mit synthetischem Band darin besteht:

- die Tastproben des ausgewählten Bereichs des Frequenzspektrums innerhalb eines Entfernungsbereichs des von einem k-ten Elementarimpulses rückempfangenen Signals mit der Konjugierten $X_{1,k}^{\bullet}(F)$ des Frequenzspektrums dieses k-ten gesendeten Elementarimpulses zu multiplizieren, um eine angepasste Filterung $X_{1,k}(f)$ durchzuführen, die der folgenden Beziehung entspricht:

$$X_{1,k}(F) = P\left(F - \Delta f_{p(k)}\right)e^{-i2\pi\left(F - \Delta f_{p(k)}\right)T/2}$$

wobei P(F) das Spektrum eines Elementarimpulses ist, der mit der zentralen Trägerfrequenz des Wellenformmusters mit synthetischem Band gesendet wird, und

- die für die von den Elementarimpulsen rückempfangenen Signale nach geeigneten Filterungen erhaltenen Spektrumsbereiche nebeneinander anzuordnen, um ein globales Frequenzspektrum zu erzeugen, das demjenigen eines Signals entsprechen würde, das als Antwort auf einen einzigen linear frequenzmodulierten Impuls im Band NxB nach einer angepassten Filterung erhalten wird.

**5.** Verfahren nach Anspruch 1, **dadurch gekennzeichnet, dass** die Konstruktion der Abtastung des Produkts des globalen Frequenzspektrums des empfangenen Signals mit der Konjugierten des globalen Frequenzspektrums eines Wellenformmusters mit synthetischem Band darin besteht:

- die Tastproben des ausgewählten Bereichs des Frequenzspektrums innerhalb eines Entfernungsbereichs des von einem k-ten Elementarimpuls rückempfangenen Signals mit der Konjugierten $X_{1,k}^{(s)*}(F)$ des Frequenzspektrums dieses gesendeten k-ten Elementarimpulses zu multiplizieren, um eine angepasste Filterung durchzuführen, wobei $X_{1,k}^{(s)}(f)$ der folgenden Beziehung entspricht:

$$X_{1,k}^{(s)}(F) = P\left(F - \Delta f_{p(k)}\right) e^{-i2\pi\left(F - \Delta f_{p(k)}\right)T\,2} e^{i2\pi \tilde{f}_{dc}\Delta t_k}$$

wobei P(F) das Spektrum eines Elementarimpulses ist, der mit der zentralen Trägerfrequenz des Wellenformmusters mit synthetischem Band gesendet wird, und $\tilde{f}_{dc}$ ein mittlerer Doppler-Parameter ist, der den Einfluss der Zeitvariablen in Azimutrichtung t auf die Gesamtlaufzeit Radar-Ziel ausdrückt, und

- die Frequenzspektrumsbereiche, die für die im Gegenzug von den Elementarimpulsen empfangenen Signale nach angepassten Filterungen erhalten werden, nebeneinander anzuordnen, um ein globales Frequenzspektrum zu erzeugen, das demjenigen eines Signals entsprechen würde, das als Antwort auf einen einzigen linear frequenzmodulierten Impuls mit dem Band NxB nach einer angepassten Filterung erhalten wird.

**6.** Verfahren nach Anspruch 1, **dadurch gekennzeichnet, dass** die Konstruktion der Abtastung des Produkts des globalen Frequenzspektrums des empfangenen Signals mit der Konjugierten des globalen Frequenzspektrums eines Wellenformmusters mit synthetischem Band darin besteht:

- die Tastproben der ausgewählten Bereiche der Frequenzspektren der von den Elementarimpulsen rückempfangenen Signale nebeneinander anzuordnen, und

- die Tastproben des erhaltenen globalen Frequenzspektrums mit der Konjugierten $X_1^*(F)$ des aus der Nebeneinanderanordnung der Frequenzspektren der gesendeten Elementarimpulse resultierenden globalen Frequenzspektrums zu multiplizieren, wobei $X_1(F)$ der folgenden Beziehung entspricht:

$$X_1(F) = \sum_k P\left(F - \Delta f_{p(k)}\right) e^{-i2\pi\left(F - \Delta f_{p(k)}\right)T/2} rect\left[\frac{F - \Delta f_{p(k)}}{B}\right]$$

wobei P(F) das Spektrum eines Elementarimpulses ist, der mit der zentralen Trägerfrequenz des Wellenformmusters mit synthetischem Band gesendet wird.

**7.** Verfahren nach Anspruch 1, **dadurch gekennzeichnet, dass** die Konstruktion der Abtastung des Produkts des globalen Frequenzspektrums des empfangenen Signals mit der Konjugierten des globalen Frequenzspektrums eines Wellenformmusters darin besteht:

- die Tastproben der ausgewählten Bereiche der Frequenzspektren der von den Elementarimpulsen rückempfangenen Signale nebeneinander anzuordnen, und

- die Tastproben des erhaltenen globalen Frequenzspektrums mit der Konjugierten $X_1^{(S)*}(F)$ des aus der Nebeneinanderanordnung der Frequenzspektren der gesendeten Elementarimpulse resultierenden globalen Frequenzspektrums zu multiplizieren, wobei $X_1^{(s)}(F)$ der folgenden Beziehung entspricht:

$$X_1^{(s)}(F) = \sum_k rect\left[\frac{F - \Delta f_{p(k)}}{B}\right] P\left(F - \Delta f_{p(k)}\right) e^{-i2\pi\left(F - \Delta f_{p(k)}\right)T/2} e^{i2\pi \tilde{f}_{dc}\Delta t_k}$$

wobei P(F) das Spektrum eines mit der zentralen Trägerfrequenz des Wellenformmusters mit synthetischem Band gesendeten Elementarimpulses und $\tilde{f}_{dc}$ ein mittlerer Doppler-Parameter ist, der den Einfluss der Zeitvariablen in Azimutrichtung t auf die Gesamtlaufzeit Radar-Ziel ausdrückt.

**8.** Verfahren nach Anspruch 1, **dadurch gekennzeichnet, dass** es außerdem darin besteht, eine komplementäre Initialisierungsverarbeitung für eine Doppler-Verarbeitung an den Tastproben des empfangenen komprimierten Signals innerhalb eines Entfernungsbereichs durchzuführen, die in einer zweidimensionalen Tabelle $v_2(\tau,t)$ in Abhängigkeit von den zwei Zeitvariablen $\tau$ gemäß der Entfernungsachse und t gemäß der Azimutachse eingeordnet werden, wobei die komplementäre Verarbeitung darin besteht, nachdem nacheinander eine Fourier-Transformation innerhalb eines Entfernungsbereichs und dann eine Fourier-Transformation in Azimutrichtung an dem Signal durchgeführt wurde, um in die Frequenzbereiche innerhalb eines Entfernungsbereichs mit einer Frequenzvariablen F und in Azimutrichtung mit einer Frequenzvariablen f überzugehen und eine Tastprobentabelle $V_2(F,f)$ zu erhalten, die Folgen von Tastproben, die zu den verschiedenen Spektralregionen innerhalb eines Entfernungsbereichs der Elementarimpulse gehören, die das Band NxB der Frequenzvariablen F in N Subbänder einer Breite B teilen, mit einem Phasenkorrekturterm wie:

$$\exp\left\{-i2\pi\left(f - \tilde{f}_{dc}\right)\Delta t_k\right\}$$

zu multiplizieren, wobei $\Delta t_k$ die Verzögerung ist, die den k-ten betrachteten Impuls von der Mitte des Musters der Sendewellenform trennt, zu dem er gehört, und $\tilde{f}_{dc}$ ein mittlerer Doppler-Parameter ist, der den Einfluss der Zeitvariablen t auf die Gesamtlaufzeit Radar-Ziel ausdrückt.

FIG.1

FIG.2

FIG.3

300 301

SURÉCHANTILLONNAGE
PAR N

$FFT_z$

## FIG.4

310 311

$FFT_z$

JUXTAPOSITION
DE N SPECTRES

## FIG.5

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.P. HARDANGE ; P. LACOMME ; J.C. MAR-CHAIS.** *Radars aéroportés et spatiaux,* 1995, 165-167

- **MC GROARY ; LINDELL.** A Stepped Chirp Technique For Range Resolution Enhancement. *National Telesystems Conference,* 1991